# EUROPÄISCHE PATENTSCHRIFT

(11) **EP 2 180 940 B1**
(45) Veröffentlichungstag und Bekanntmachung des Hinweises auf die Patenterteilung: **03.08.2011**
(21) Anmeldenummer: 08787443.4
(22) Anmeldetag: 22.08.2008
(51) Int. Cl.: B01F 9/04, B01F 13/02, B01F 15/00, B08B 9/093, C08B 15/00, B65B 1/28, B65G 69/18, B01J 2/16

(54) **VERFAHREN UND VORRICHTUNG ZUM KONTAMINATIONSFREIEN BESCHICKEN UND ENTLEEREN**
METHOD AND APPARATUS FOR CONTAMINATION-FREE LOADING AND EMPTYING
PROCÉDÉ ET DISPOSITIF DE CHARGEMENT ET DE VIDAGE SANS CONTAMINATION

(30) Priorität: 22.08.2007 DE 102007039759
(43) Veröffentlichungstag der Anmeldung: 05.05.2010
(73) Patentinhaber: Denk, Richard, 85298 Scheyern (DE)
(72) Erfinder: Denk, Richard, 85298 Scheyern (DE)
(74) Vertreter: Alber, Norbert
(86) Internationale Anmeldenummer: PCT/EP2008/061048
(87) Internationale Veröffentlichungsnummer: WO 2009/024617

(56) Entgegenhaltungen:
- WO-A-02/076621
- WO-A-2005/056443
- DE-A1- 3 206 385
- DE-A1- 3 739 976
- DE-A1- 10 311 997
- DE-A1- 19 806 932
- US-B1- 6 653 377

## Beschreibung

### I. Anwendungsgebiet

Die Erfindung betrifft kontaminationsfrei zu beschickende und entleerende Geräte und Maschinen, insbesondere einen Mischer, Granulator oder Trockner.

### II. Technischer Hintergrund

Vor allem in der Arzneimittelindustrie, aber auch in der chemischen Industrie müssen häufig Stoffe, die toxische Stoffe enthalten, gehandhabt werden, z. B. gemischt, granuliert oder getrocknet werden.

Dabei besteht das Problem darin, dass zwar während des Mischens der Mischer dicht verschlossen werden kann und dabei keine toxischen oder aus anderen Gründen unerwünschte Stoffe (Kreuzkontamination) nach Außen oder nach Innen zum Produkt dringen können, jedoch spätestens beim Öffnen des Mischers die Umgebung kontaminiert wird.

Deshalb sind diese Maschinen - im folgenden ist nur noch von Mischern die Rede, ohne die Erfindung jedoch hierauf zu beschränken - bisher in Räumen untergebracht, die ihrerseits wiederum vollständig dicht gegenüber der Umgebung abgeschottet sind, um in den umgebenden Mischraum austretende Kontaminationen nicht weiter nach außen in die Umwelt gelangen zu lassen oder das Produkt zu kontaminieren.

Dies erhöht jedoch den Folgeaufwand für das z. B. Mischen solcher Stoffe erheblich, indem nach dem Mischen nicht nur der Mischer selbst gereinigt werden muss, sondern auch der Mischraum, in dem sich der Mischer befand, als die der Mischer nach dem Einsatz geöffnet und entleert wurde.

Hinzu kommt, dass zusammen mit dem Mischen oder nach dem Mischen weitere Bearbeitungsschritte durchgeführt werden müssen, wie etwa das Granulieren, das Beschichten des Granulats mit einem Gleitmittel oder auch das Trocken, z. B. nach Erzeugen des Granulats, wobei bei diesen Bearbeitungsschritten die gleichen Probleme wie beim eigentlichen Mischen auftauchen.

Sofern es sich bei den Ausgangsstoffen um pulverförmige Stoffe handelt - was meistens der Fall ist - wird das Mischen in einer Mischtrommel meist zweistufig durchgeführt, nämlich einerseits durch eine Grobvermischung, herbeigeführt durch eine Drehbewegung oder Taumelbewegung der geschlossenen Mischtrommel, und andererseits durch eine anschließende Feinvermischung.

Zu diesem Zweck bestehen die Wände der Mischtrommel zumindest abschnittweise aus einem Material, beispielsweise einem Sintermaterial, welches für die zu mischenden Stoffe - meist Feststoffe, seltener Flüssigkeiten - nicht durchlässig ist, jedoch für Luft durchlässig ist, vorzugsweise nur in der Strömungsrichtung von außen nach innen, also in den Mischer hinein, durchlässig ist.

Auf diese Art und Weise kann durch diese teilweise durchlässigen Wandbereiche hindurch in großer Menge und auch unter ausreichendem Druck Luft von außen in den Mischer gepresst werden, wodurch die z. B. staubförmigen Inhaltsstoffe im Inneren des Mischers stark durcheinander gewirbelt und optimal gemischt werden.

Das Problem dieser teilweise durchlässigen Wandbereiche besteht darin, dass sie für die Inhaltsstoffe des Mischers theoretisch von innen nach außen nicht zu durchdringen sind, hierfür von den Herstellern solcher Materialien jedoch nur eine Sicherheit unterhalb der 100%-Marke gewährt werden kann, so dass nicht ausgeschlossen ist, dass der Raum außerhalb des Mischers kontaminiert wird, indem geringfügigste Mengen aus dem Inneren des Mischers durch diese teilweise durchlässigen Wandbereiche doch nach außen gelangen.

Durch die dichte umlaufende Abdeckung der wenigstens teilweise durchlässigen Wandbereiche ist die Trommel des Mischers - wenn alle übrigen Einsätze und Auslässe ordnungsgemäß verschlossen sind - dicht verschlossen, so dass selbst für den Fall des Auftretens von Inhaltsstoffen von innen nach außen durch die teilweise durchlässigen Wandbereiche hindurch keine Kontamination der Umgebung erfolgt.

Diese Abdeckung kann ein fester formhaltiger Deckel sein, wie aus der DE 32 06 385 A1 und DE 37 39 976 A1, die eine Vorrichtung gemäß dem oberbegriff des Anspruchs 1 offenbart, bekannt.

### III. Darstellung der Erfindung

### a) Technische Aufgabe

Es ist daher die Aufgabe gemäß der Erfindung, eine Maschine, wie etwa einen Mischer sowie ein Verfahren zu seinen Betrieb aufzuzeigen, mittels deren auch toxische Stoffe mit vergleichsweise geringen Aufwand gemischt und danach entleert und der Mischer für die erneute Verwendung vorbereitet werden kann.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Die Folie beziehungsweise der Deckel überspannen dabei die teilweise durchlässigen Randbereiche auf der Außenseite der Trommel, und liegen zu diesem Zweck außerhalb der teilweise durchlässigen Wandbereiche dicht umlaufend an der Außenseite der Trommel an, und zwar sowohl oberhalb als auch unterhalb der durchlässigen Wandbereiche, wenn es sich dabei um einen ringförmigen Wandbereich handelt, beziehungsweise umlaufend geschlossen um diese Randbereiche herum, wenn es sich dabei um singuläre Flächen handelt.

Vorzugsweise ist die Trommel dabei so gestaltet, dass sie im oberen Bereich eine zylindrische Form aufweist, sich im unteren Bereich jedoch konisch zu dem zentral am tiefsten Punkt angeordneten Auslauf hin verjüngt und als teilweise durchlässige Wandbereiche dabei vorzugsweise die sich konisch verjüngenden Wandbereiche ausgebildet sind, also von dem nicht durchlässigen Stutzen des Auslasses bis zu den darüber liegenden zylindrischen Wandbereichen. Da in diesem Fall die durchlässigen Wandbereiche ringförmig umlaufende durchlässige Wandbereiche sind, wird als abdeckende Folie eine schlauchförmige Folie verwendet, die ringförmig sowohl oberhalb als auch unterhalb der durchlässigen Wandbereiche dicht anliegend befestigt wird, also in diesem Fall auf der Außenseite des Auslass-Stutzens sowie auf der Außenseite der zylindrischen Wandbereiche oberhalb des Konus.

Wichtig ist dabei, dass die Schutzfolie in axialer Richtung so lang ausgebildet ist, dass auch ohne Entfernen der oberen Befestigung der Folie die Trommel vollständig aus einem umgebenden z. B. Druckbehälter entfernt werden kann, obwohl die obere Befestigung der Folie an diesem umgebenden Behälter befestigt bleibt, und zusätzlich dabei die Folie zwischen der Trommel und dem davon axial entfernten Druckbehälter radial dicht verschlossen werden kann, beispielsweise durch radiales Zusammenpressen der Schlauch für mit Folie mittels eines starken Kabelbinders oder einer anderen Klemm-Vorrichtung.

Auch die Folie wird umlaufend auf den gewünschten Außendurchmesser entweder der Trommel oder des Druckbehälters mittels geeigneter, insbesondere lösbarer, Klemm-Vorrichtungen befestigt, beispielsweise mithilfe eines umlaufenden O-Ringes oder eines spannbaren Spanngurtes.

Falls der teilweise durchlässige Bereich der Wand der konische Bereich ist, verjüngt sich vorzugsweise auch die diesen Konus abdeckende Folie vom Bereich oberhalb zum Bereich unterhalb des Konus in ihrem Durchmesser, damit die Folie einigermaßen eng am teilweise durchlässigen Bereich anliegt.

Wichtig ist jedoch, dass die Folie über die obere Befestigung an der Trommel hinaus einen wiederum schlauchförmig umlaufenden, oberen Überstand aufweist, dessen Funktion darin liegt, das Beabstanden der Trommel zu dem aufnehmenden z. B. Schutzbehälter oder Druckbehälter zu ermöglichen.

Vor allem dieser obere Überstand, vorzugsweise jedoch die gesamte Schlauchförmige Folie weist einen größeren Durchmesser auf als der Außendurchmesser, auf dem die Folie dicht anliegend gehalten werden soll, also insbesondere des Außendurchmessers des Druckbehälter an derjenigen Stelle, an der der obere Überstand der Folie befestigt werden soll.

Hinsichtlich der Befestigung nahe des Auslaufes ist der Auslauf so gestaltet, dass sein Öffnen oder Schließen die in der Nähe des Auslasses befestigte Folie oder deren Klemmvorrichtung nicht beeinträchtigt, also der Auslauf geöffnet und geschlossen werden kann, ohne die dichte Anlage der Folie auf der Außenseite des Auslauf-Stutzens zu beeinträchtigen.

Üblicherweise wird bei solchen Mischern der Auslauf durch einen Auslaufverschluss dicht verschlossen, der im Inneren des Auslauf-Stutzens dicht anliegend sitzt und vorzugsweise eine konvexe Wölbung seiner Stirnseite ins Innere der Trommel hinein aufweist. Zum Öffnen des Auslaufes wird dieser Auslaufverschluss ins Innere der Trommel hinein verlagert, so dass der Inhalt an dem Verschluss vorbei durch den dann offenen Stutzen schwerkraftbedingt herauslaufen kann.

Dagegen wird der obere Überstand mittels einer weiteren umlaufend dichten Befestigung etwa mittels einer Klemmvorrichtung am Außenumfang des unteren Endes des oberen Teils des Druck-Behälters befestigt, so dass mittels der Folie ein kontaminationsdichter Raum, gebildet durch den oberen Teil des Druck-Behälters und die Folie, entsteht, aus dem lediglich der Auslass-Stutzen vorsteht, der ebenfalls kontaminationsdicht verschlossen werden kann.

Innerhalb der Folie mündet im oberen Teil des Druckbehälters ein Lufteinlass, also zwischen der Folie und der Wand der Trommel, über den Luft unter Überdruck eingeblasen werden kann, die weiter strömt durch die durchlässigen Bereiche der Wand der Trommel in die Trommel hinein und dort das Mischgut durcheinander wirbelt und eine feine Vermischung bewirkt.

Damit die Einströmung der Luft an der im mittleren Bereich losen Folie keine Verwirbelungen erfährt oder gar die Folie beschädigt, besitzt der Druckbehälter insbesondere im unteren Teil einen Unterdruckanschluss, um die dort liegende Folie nach außen an die Innenseite des Behälters heran zu ziehen und dadurch das Einströmen der Misch-Luft zu vereinfachen.

Die Trommel weist ferner an ihrer Oberseite einen, meist jedoch mehrere, Anschlussstutzen auf, an denen nach Öffnen der normalerweise verschlossenen Stutzen passende Anschlussteile wie etwa ein Filter, ein Beschickungsstutzen oder ein Messinstrument für eine zusätzliche Komponente angesetzt werden können.

Auch beim Ansetzen dieser Anschlussteile wird der beim Ansetzen offene Übergang zwischen Trommel und Anschlussteil wiederum durch eine schlauchförmige Folie abgedichtet, die einerseits an dem Anschlussstutzen und andererseits an dem davon abgewandten Ende des anzusetzenden Ansatzteiles dicht umlaufend befestigt wird, und zwar bevor der entsprechende Anschlussstutzen geöffnet wird. Der Verschlussstopfen oder das Verschlusssystem, welches den Anschlussstutzen verschließt, wird erst danach geöffnet, so dass der Anschlussstutzen innerhalb der Folie verbleibt, solange das Anschlussteil auf den Anschlussstutzen aufgesetzt bleibt. Danach wird das Anschlussteil wieder von dem Anschlussstutzen entfernt, wobei die Folie nach wie vor die dazwischen sich ergebende Lücke dicht umschließt, und erst nachdem der innerhalb der Folie sich befindende Verschlussstopfen den Anschlussstutzen wieder verschließt, kann die Folie verschlossen und entsorgt werden, was später beschrieben wird.

Auch in diesem Fall muss die schlauchförmige Folie in axialer Richtung ausreichend lang sein, um das Abnehmen des Anschlussteiles vom Anschlussstutzen soweit zu ermöglichen, dass dazwischen ein dichtes radiales Verschließen der Folie möglich wird.

Während die Trommel wahlweise als wiederverwendbares Teil oder auch als nur einmal zu benutzendes Teil konzipiert sein kann, ist der sehr stabil auszuführende Druckbehälter zu teuer, um ihn nur einmal zu verwenden. Der Druckbehälter muss deshalb nach der Benutzung in Form des Einsatzes einer gefüllten Trommel und der feinen Vermischung innerhalb dieser Trommel im Druckbehälter aufbereitet werden für eine erneute Verwendung, also vor allem dekontaminiert werden.

Zu diesem Zweck ist eine Reinigungshaube verfügbar, die nach dem Abnehmen des Unterteils des Druckbehälters auf dessen Oberteil von unten her aufgesetzt wird und mit diesem dicht verbunden werden kann. Diese Reinigungshaube enthält in ihrem Inneren eine Spülvorrichtung sowie einen Auslauf nach unten für die Spülvorrichtung.

Ferner weist diese Reinigungshaube eine Entsorgungsöffnung auf, die ausreichend groß ist zum Durchführen einer Faust und nahe an dem Bereich angeordnet ist, in dem sich nach Aufsetzen der Reinigungshaube auf das Unterteil des Druckbehälters die am Oberteil verbliebene Restfolie befindet.

Zusätzlich ist eine Dekontaminationsvorrichtung verfügbar, die auf die Entsorgungsöffnung der Reinigungshaube passt und mit deren Hilfe der dort unter anderem befindliche Rest des Entsorgungsbeutels kontaminationsfrei entsorgt werden können. Eine analoge Dekontaminationsvorrichtung ist passend für die Anschlussstutzen an der Oberseite der Mischtrommel verfügbar.

Mit diesen Einzelteilen ist folgende Vorgehensweise zum Kontaminationsfreien Beschicken und Entleeren eines Mischers durchführbar:

Bevor durch den Einlass in der Trommel die einzelnen, meist Pulverförmigen, Komponenten der herzustellenden pulverförmigen Mischung in die Trommel gegeben werden, wird der Wandbereich der Trommel, der als teilweise durchlässig ausgebildet ist, um dadurch später Mischluft in die Trommel einzupressen, von einer Folie, beispielsweise einer schlauchförmigen Folie, überdeckt und abseits der teilweise durchlässigen Wandbereiche umlaufend dicht an der Außenseite der Trommel befestigt. Anschließend kann - bei verschlossenem Einlass - die Trommel durch Drehen oder Durchführen einer Taumelbewegung einer Grob-Vermischung unterzogen werden.

Anschließend kann die so hergestellte Mischung aus der Trommel entleert werden, indem die Trommel mit ihrem Auslass auf einen passenden Abführstutzen gesetzt und der Auslass geöffnet wird. Da die Folie sich nicht über den Auslass hinweg erstreckt, sondern lediglich zum Beispiel am Außenumfang des Auslass-Stutzens dicht anliegend befestigt ist, wird der Abdichtungseffekt der Folie durch den Auslass-Vorgang nicht beeinträchtigt oder gar unterbrochen.

Häufig muss jedoch zusätzlich zu der durch die Bewegung der Trommel durchgeführten Grob-Vermischung einen Fein-Vermischung durchgeführt werden durch Einpressen von Mischluft durch die teilweise durchlässigen Wandbereiche hindurch ins Innere der Trommel.

In diesem Fall muss die eingepresste Mischluft die Trommel auch wieder verlassen können, um keinen Überdruck in der Trommel aufzubauen. Zu diesem Zweck wird auf speziell vorhandene Anschlussstutzen meist in der oberen Stirnfläche der Trommel jeweils ein Filtereinsatz aufgesetzt, durch den hindurch die Mischluft die Trommel verlassen kann, ohne Bestandteile der Mischung aus der Trommel zu entfernen.

Um beim Öffnen und Ansetzen der Anschlussstutzen und anschließendem Ansetzen der Ansatzteile wie etwa eines Filtereinsatzes eine Kontaminierung der Umwelt zu vermeiden, wird wiederum vorher eine Abdichtung mittels einer schlauchförmigen Folie durchgeführt:

Bei noch geschlossenem Anschlussstutzen wird die Folie einerseits am Außenumfang des Anschlussstutzens und andererseits am davon abgewandten Ende des bereits angenäherten Anschlussteiles befestigt, und zwar wiederum dicht rundumlaufend. Erst danach wird der Verschluss des Anschlussstutzens geöffnet, und damit innerhalb der Folie geöffnet und dort belassen, und zwar während der ganzen Zeit, in der danach das Anschlussteil wie etwa ein Filtereinsatz auf den Anschlussstutzen aufgesetzt verbleibt.

In gleicher Art und Weise wird gegebenenfalls ein Beschickungsstutzen an einem anderen der Anschlussstutzen dicht aufgesetzt unter vorheriger Abdichtung mittels einer schlauchförmigen Folie.

Das Einblasen von Mischluft in die Trommel erfolgt jedoch in der Regel nur dann, wenn die Trommel vorher in einem Druckbehälter aufgenommen wurde, um im Falle einer Staubexplosion im Inneren der Trommel den Explosionsdruck durch die Druckbehälter aufzunehmen.

Der Druckbehälter ist dabei meist etwa zylindrisch oder eiförmig ausgebildet und im mittleren Bereich seiner Längsachse teilbar in einem oberen Teil und einen unteren Teil. Die Mischluft wird dann über eine Mündung zum Beispiel dem freien Ende des oberen Teiles zugeführt, welches freien Zugang zum Innenraum des Druckbehälters bietet..Zu diesem Zweck befindet sich diese Mündung beispielsweise in einem zum Außenumfang radial nach innen zurückversetzten Ringflansch.

Wenn die Trommel, an deren Außenumfang die Folie befestigt ist, in das Oberteil des Druckbehälters von unten eingesetzt wird, befindet sich die obere Befestigung der Folie noch außerhalb des Oberteils des Druckbehälters. Der obere Überstand der Folie, der über diese obere Befestigung vorsteht, ist jedoch ausreichend lang, um auf dem Außenumfang einem Außenumfang des Oberteils des Druckbehälters befestigt zu werden, der bereits außerhalb der Mündung für die Mischluft liegt, beispielsweise auf dem Außenumfang des radial nach ihnen zurück versetzten Ringflansch ist am unteren Ende des Oberteils. Nachdem die Folie dort nicht umlaufend befestigt ist, kann das Unterteil des Druckbehälters dicht an das Oberteil angesetzt werden. Sofern an der Trommel Anschlussteile angesetzt waren, weist die Mischtrommel an den entsprechenden Positionen und in der entsprechenden Größe Anschlussadapter auf, die dicht auf die im Druckbehälter sitzende Trommel und die dortigen Anschlussteile passen.

Bevor nunmehr Mischluft über den Druckbehälter in die Trommel eingepresst wird, wird zuvor über einen Unterdruckanschluss im Bereich der Folie, also meist im Unterteil des Druckbehälters, die Folie an die Innenfläche des Druckbehälters angesagt, damit zwischen Folie und Außenseite der Trommel ein ausreichender Abstand erhalten bleibt für das Einströmen der Mischluft zunächst zu dem teilweise durchlässigen Wandbereich gehen und von dort ins Innere der Trommel. Hierfür wird vor dem Einblasen der Mischluft und nach dem Befestigen des oberen Überstandes der Folie am Außendurchmesser des Druckbehälters die obere Temporichtung der Folie an der Trommel gelöst, wodurch erst der benötigte Durchlass für die Mischluft freigegeben wird.

Nunmehr kann das Mischgut in der Trommel einer Fein-Vermischung unterzogen werden durch Einpressen von Mischluft in die Trommel oder auch weiteren Bearbeitungsschritten, beispielsweise dem Granulieren, was durch zusätzliche Zugabe von Feuchtigkeit über den Beschickungsstutzen erfolgt. Auch das Beschichten eines Granulats mit einer Gleitschicht am Außenumfang der Granulatkörner ist möglich durch zusätzliches Einbringen eines meist flüssigen Gleitmittels über einen solchen Anschlussstutzen.

Wenn alle diese beabsichtigten Bearbeitungs-Schritte des Mischgutes in der Trommel durchgeführt sind, kann die Trommel aus dem Druckbehälter entnommen und anschließend entleert werden, was wie folgt abläuft:

Selbstverständlich können alle bisher bezüglich des Oberteils des Druckbehälters beschriebenen Vorgänge und funktionalen Merkmale stattdessen auch am Unterteil vorhanden sein und umgekehrt.

Die Trommel kann somit nunmehr aus dem Oberteil des Druckbehälters herausgenommen werden, ohne dass die Befestigung des oberen Überstandes der Folie am Außendurchmesser des Oberteils des Druckbehälters gelöst wird. Voraussetzung dafür ist, dass die Folie in axialer Richtung ausreichend lang dimensioniert ist, um nicht nur die Trommel vollständig aus dem Oberteil des Druckbehälters herausnehmen zu können, sondern zusätzlich dazwischen die schlauchförmige Folie auch radial abdichtend zusammenpressen zu können an einer oder auch zwei zueinander axial beanstandeten Schließstellen.

Anschließend wird die dicht verschlossene Folie an der einen Schließstelle oder zwischen den beiden Schließstellen getrennt, so dass eine Restfolie an dem Oberteil des Druckbehälters verbleibt, der Hauptteil der Folie jedoch nunmehr die separierte Trommel vollständig dicht umschließt bis auf den Auslass an der Trommel. Damit kann die noch gefüllte Trommel nunmehr zu einem Abführstutzen oder Ähnlichem verbracht werden, auf welchen die Trommel mit ihrem Auslass dicht aufgesetzt wird und anschließend der Verschluss-Stopfen des Auslasses der Trommel geöffnet wird und die Trommel entleert wird.

Abhängig davon, ob die Trommel als wieder zu verwendendes Teil oder als Teil für die einmalige Verwendung konzipiert ist, wird die nach wie vor bis auf den Auslass dicht in der Folie aufgenommene Trommel anschließend einer fachgerechten Entsorgung zugeführt oder einer Wiederaufbereitungsanlage zugeführt.

Der Druckbehälter dagegen muss wieder verwendet werden und zu diesem Zweck dekontaminiert werden. Dies erfolgt durch Überstülpen einer Reinigungshaube über die offene Seite des noch mit der restlichen Folie ausgestatteten Oberteils des Druckbehälters, da lediglich der Oberteil des Druckbehälters kontaminiert sein könnte, während das Unterteil keine Verbindung zur möglicherweise kontaminierten Innenseite der Folie hatte.

Die Reinigungshaube weist eine Entsorgungsöffnung auf, die groß genug ist, um eine Faust hindurch zu strecken. Diese Entsorgungsöffnung liegt so nahe an der Position der Restfolie, wenn sich die Reinigungshaube an dem Oberteil befindet, dass man durch die Entsorgungsöffnung hindurchgreifen und die Restfolie erfassen und vom Oberteil abziehen kann, gegebenenfalls nach Lösen der oberen Klemm Vorrichtung, mit der die Restfolie nach wie vor am Außenumfang des Oberteils befestigt ist.

Dies erfolgt nicht mit der bloßen Hand, sondern unter Verwendung eines Entsorgungsbeutels als Handschuh, der mit seiner offenen Seite dicht am Außenumfang der Entsorgungsöffnung befestigt wird. Die Restfolie wird somit durch die Entsorgungsöffnung hindurch auf die Außenseite der Reinigungshaube gezogen und befindet sich dann eingeschlossen in dem Entsorgungsbeutel, der nunmehr zwischen der aufgenommenen Restfolie und der Entsorgungsöffnung an wenigstens einer Schließstelle radial dicht zusammen gequetscht und durchgetrennt werden kann.

Damit befindet sich die Restfolie dicht eingeschlossen in dem Entsorgungsbeutel und kann entsorgt werden, und die nun frei zugängliche offene Seite des Oberteils wird bei der nun durchzuführenden Reinigung mittels der Spülvorrichtung im Inneren der Reinigungshaube auch die gesamte Innenfläche des Oberteils des Druckbehälters gereinigt.

Dadurch ist das Oberteil des Druckbehälters wieder einsatzfähig.

Sofern in dem nun noch an der Reinigungshaube verbliebenen Rest des Entsorgungsbeutels eine Kontaminierungs-Gefahr gesehen wird, kann auch auf diese Entsorgungsöffnung von außen eine Dekontaminations-Vorrichtung aufgesetzt werden, die ihrerseits wiederum im Inneren über eine Waschvorrichtung und einen Auslauf für die Waschflüssigkeit verfügt, sowie gegenüberliegend zum Anschluss für die Entsorgungsöffnung über eine weitere eigene Entsorgungsöffnung, an die wiederum ein Entsorgungsbeutel befestigt werden kann, welcher dann als Handschuh zum Ergreifen des Restes des ersten Entsorgungsbeutels dient.

Die Dekontaminationsvorrichtung ist somit hinsichtlich ihrer Funktion und Anwendung das gleiche wie die Reinigungshaube, wird jedoch lediglich auf eine andere Öffnung, nämlich auf die Entsorgungsöffnung der Reinigungshaube statt auf die offene Seite des Druckbehälters, aufgesetzt.

Analoge Dekontaminations-Vorrichtungen können auch zum Aufsetzen auf die Anschlussstutzen der Trommel 1 und verwendet werden, nachdem dort die jeweiligen Anschlussteile auf die gleiche Art und Weise zunächst abgezogen und dann zwischen Trommel und dem Anschlussteil die dortige Folie radial dicht verschlossen und durchtrennt wurde.

Vorzugsweise ist die dabei verwendete Folie eine thermoplastischen Folie, insbesondere eine heißsiegelfähige Folie, so dass das Durchtrennen mittels Hitze erfolgen kann und dadurch beim Durchtrennen gleichzeitig ein Verschweißen der Trennstelle stattfindet, was das Austreten von Kontaminierungen aus dem Foliestutzen zwischen dem offenen Ende und der nächsten Schnittstelle vermeidet.

### c) Ausführungsbeispiele

Ausführungsformen gemäß der Erfindung sind im Folgenden beispielhaft näher beschrieben. Es zeigen:
- Fig. 1:: die Mischtrommel im leeren Zustand,

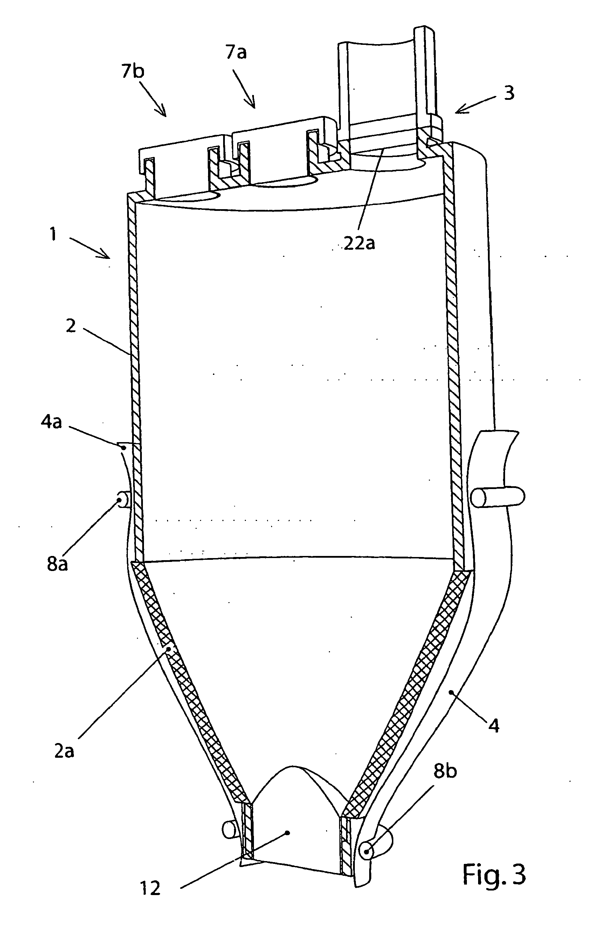

- Fig. 2 bis 4:: den Befüllvorgang,

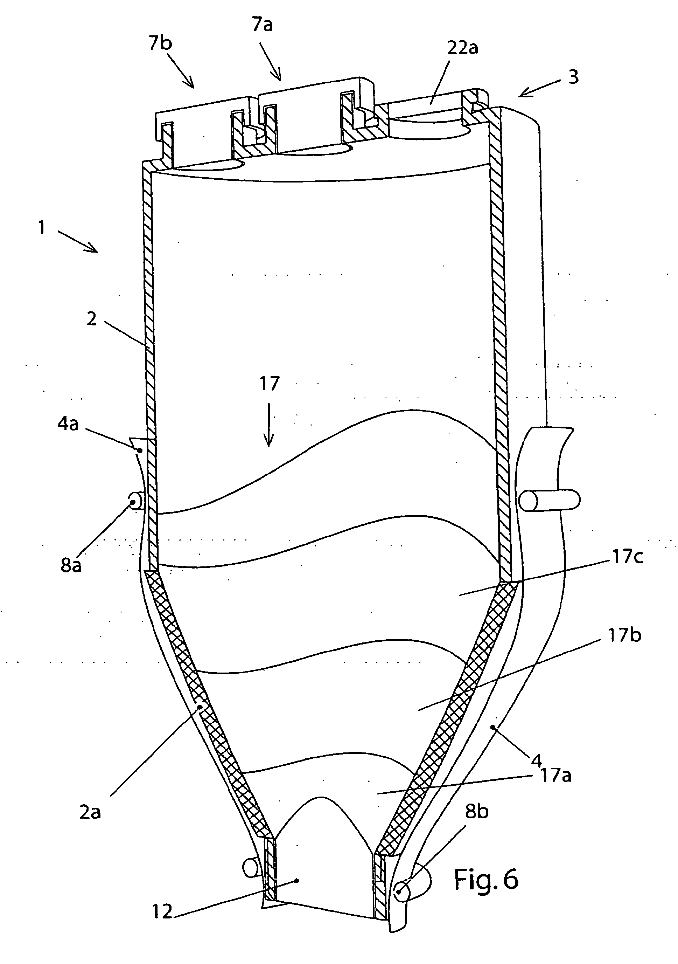

- Fig. 5 und 6:: den gefüllten Zustand,
- Fig. 7:: die Grobvermischung,
- Fig. 8:: den grob vermischten Zustand,

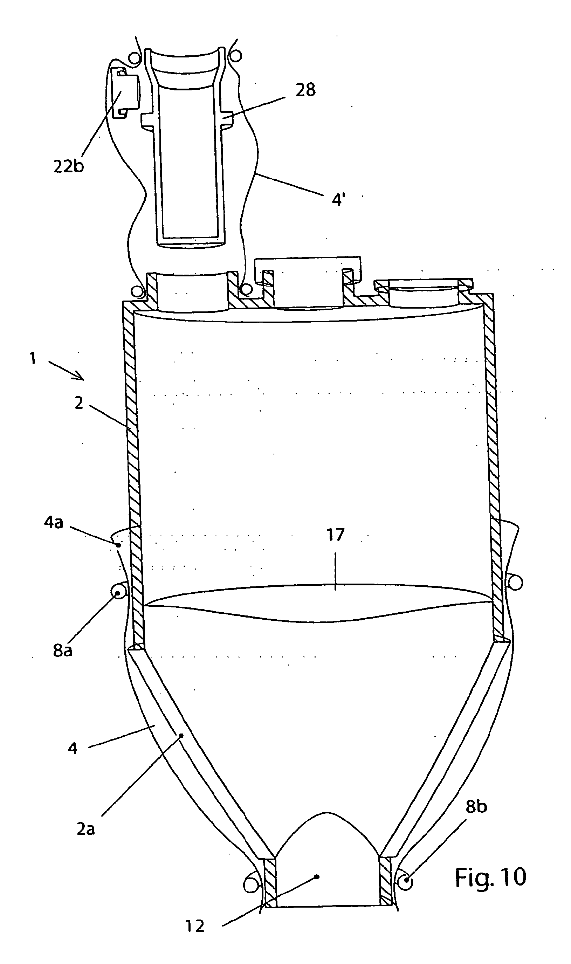

- Fig. 9-14: das Aufsetzen von Ansatzteilen,
- Fig. 15 und 16:: den Druckbehälter,

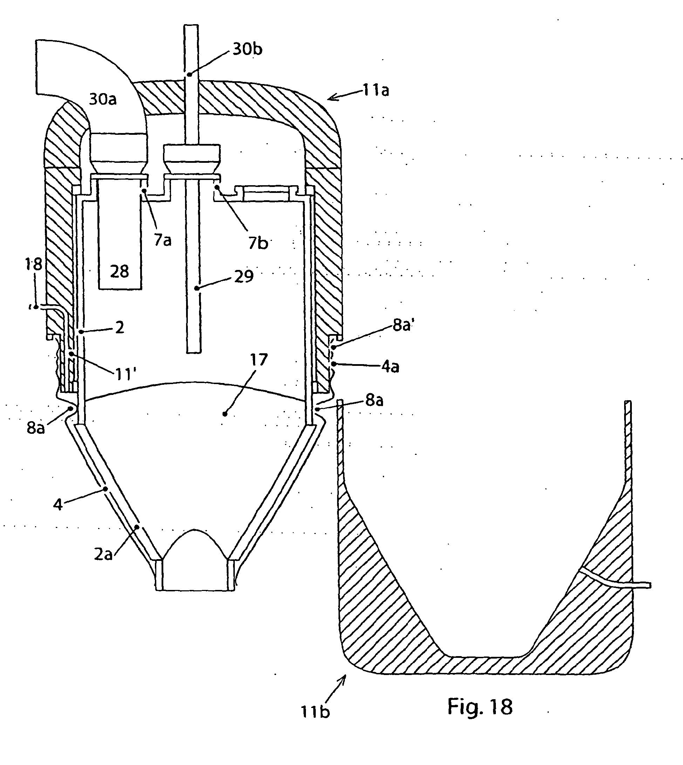

- Fig. 17 bis 21:: das Einsetzen der Mischtrommel in den Druckbehälter,

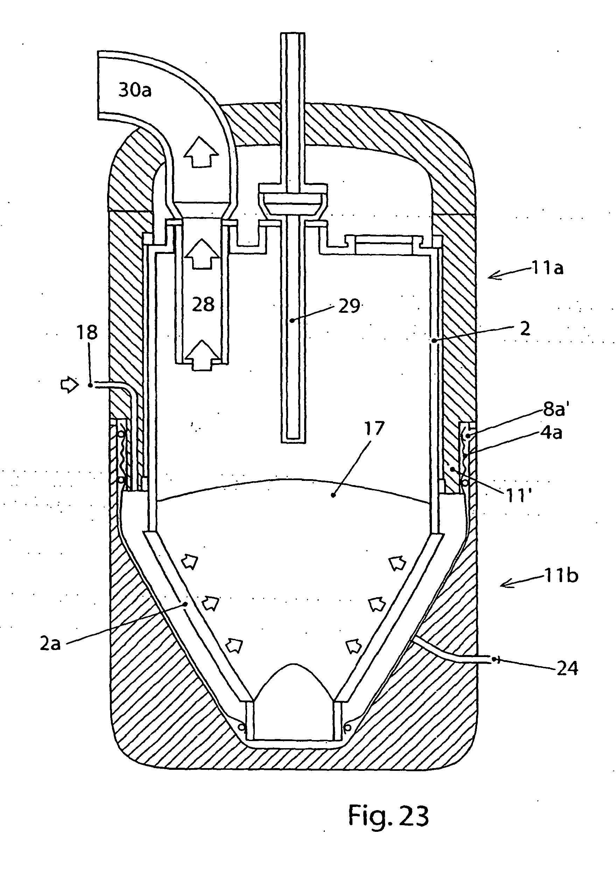

- Fig. 22 bis 24:: die Feinvermischung,

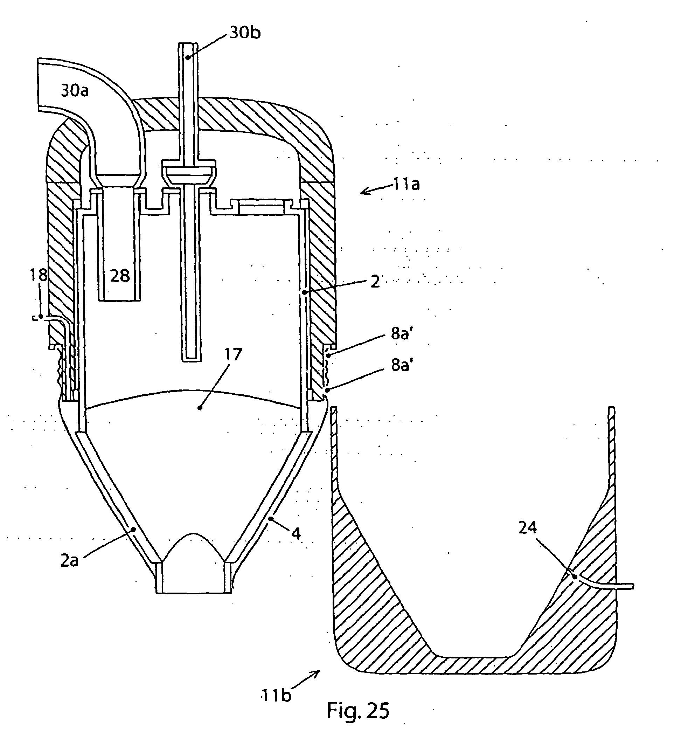

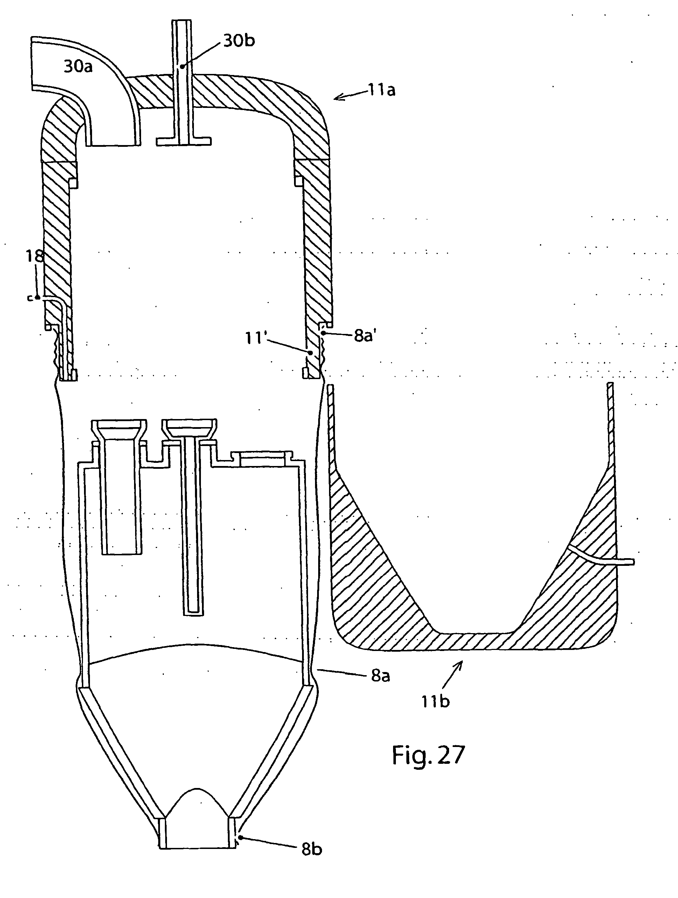

- Fig. 25 bis 28:: die Entnahme der Mischtrommel,
- Fig. 29 bis 30:: das Entleeren der Mischtrommel,
- Fig. 31 bis 37:: das Reinigen des Druckbehälters.

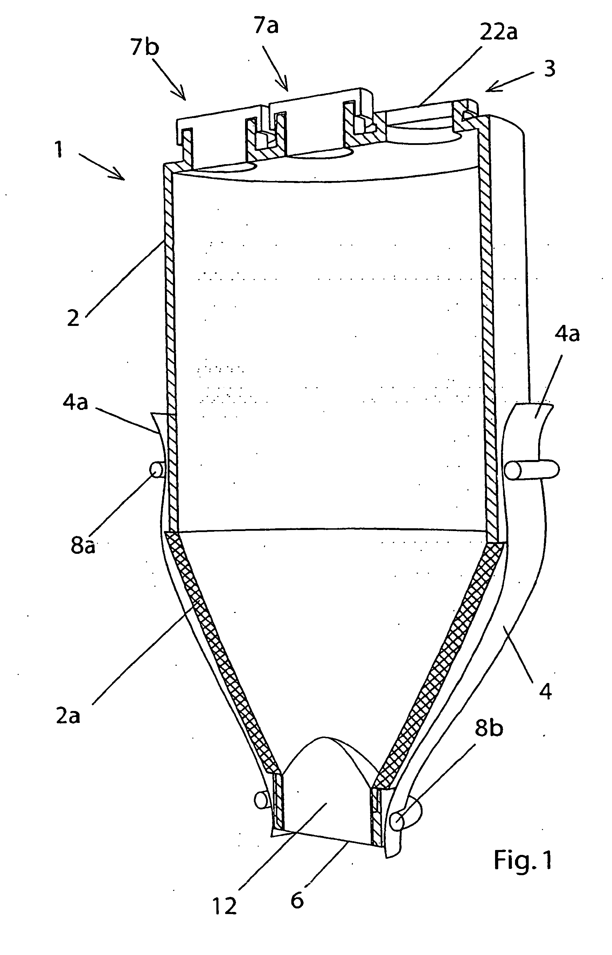

Fig. 1 zeigt einen Mischer 1 nur teilweise, nämlich lediglich die Mischtrommel 2, in die die einzelnen Komponenten, in der Regel Feststoffe in Pulverform oder Granulatform, der zur erzeugenden Mischung 17 einzeln eingefüllt und danach darin durchmischt und ggf. weiterbearbeitet werden sollen, beispielsweise
- granuliert werden sollen,
- die Körner des Granulats mit einem Gleitmittel überzogen werden sollen,
- wobei vorher das Granulat oder die Mischung getrocknet werden soll usw.

Die Mischtrommel 2 ist im oberen Teil zylindrisch ausgebildet und läuft im unteren Teil konisch auf einen Auslauf 6 zu.

Ein Teil der Wände der Trommel 2 ist teilweise durchlässig, und zwar der konische Wandbereich 2a vom zylindrischen Bereich der Trommel 2 bis kurz vor dem Auslauf 6.

Dieser Wandbereich 2a sollte für die Bestandteile der Mischung 17 im Inneren der Trommel 2, die in der Fig. 1 noch im leeren Zustand dargestellt ist, nicht durchlässig sein, jedoch von außen nach innen für einzublasende Luft durchlässig sein, die zur Feinvermischung später benötigt wird. Allerdings kann es nicht mit 100%iger Sicherheit ausgeschlossen werden, dass geringste Mengen der Mischung 17 auch in der Gegenrichtung, also von Innen nach Außen, durch diesen Wandbereich 2a, der in der Regel aus einem Sintermaterial besteht, hindurchgelangen können.

Wenn es sich dabei um toxische oder, beispielsweise auf Grund von Kreuzkontamination in der Umgebung unerwünschte Stoffe handelt, kann dies zu großen Nachteilen führen.

Die Mischtrommel weist auf der oberen Stirnseite zum einen einen Einlauf 3 in Form eines zu öffnenden Stutzens auf, der von einem Verschlussstopfen 22a verschlossen werden kann.

Daneben befindet sich mindestens ein Anschlussstutzen 7b zum Ansetzen eines Filters in der oberen Stirnseite.

Dieser wird benötigt, falls in die Trommel 2 Luft eingebracht wird, um überschüssige Luft über einen solchen Filter aus der Trommel entweichen zu lassen, ohne Bestandteile der Mischung auszutragen.

Weiter befindet sich in der oberen Stirnfläche ein Anschlussstutzen 7a für einen Einlauf weiterer Komponenten, beispielsweise von Flüssigkeit zum Granulieren eines pulverförmigen Stoffes oder eines flüssigen Gleitmittels zum Aufbringen auf der Außenfläche der Granulat-Körner.

Am unteren, konisch zulaufenden Ende kann der Auslauf 6 durch einen Auslaufverschluss 12 verschlossen werden, wie in Fig. 1 dargestellt. Der Auslaufverschluss 12 besitzt dabei meistens eine konvex ins Innere der Trommel 2 hineingewölbte Stirnfläche und sitzt in dem rohrförmigen, unteren Ende der Mischtrommel 2.

Fig. 1 zeigt ferner, dass die konischen Wandbereiche als teilweise durchlässige Wandbereiche 2a gestaltet sind. Wie später ausführlich erläutert wird, wird dies benötigt, um von außen durch diesen teilweise durchlässigen Wandbereich 2a hindurch Luft in großen Mengen und auch mit Überdruck in die Trommel 2 einzupressen und die dort vorhandene Mischung 17 durch die Luftströmung durcheinander zu wirbeln und dadurch eine Vermischung zu bewirken. Die Lufteinbringung dient nicht nur dem Mischen, sondern auch dem Trocknen nach dem Granulieren oder zum Aufwirbeln des Produktes während des Beschichtens.

Da nicht 100%ig ausgeschlossen werden kann, dass durch diese teilweise durchlässigen Wandbereiche 2a hindurch Bestandteile der Mischung 17 nach außen entweichen - sofern alle anderen Ein- und Auslässe ordnungsgemäß verschlossen sind - sind diese Wandbereiche 2a umlaufend von einer schlauchförmigen Folie 4 auf der Außenseite der Trommel 2 abgedeckt, die oberhalb und unterhalb des teilweise durchlässigen Wandbereiches 2a, in diesem Fall einerseits auf dem zylindrischen Außendurchmesser und andererseits auf den Auslassstutzen, von geeigneten Klemmvorrichtungen 8a, b dicht und über den gesamten Umfang umlaufend an der Außenfläche der Trommel 2 angepresst werden.

Wichtig ist dabei, dass die schlauchförmige Folie 4 über die obere Klemmvorrichtung 8a hinaus einen oberen Überstand 4a aufweist, dessen Funktion später beschieben wird.

Die folgenden Figuren zeigen den Ablauf beim Herstellen einer Mischung 17 in dieser Trommel 2 eines Mischers 1 und ggf. weitere Bearbeitungsschritte:

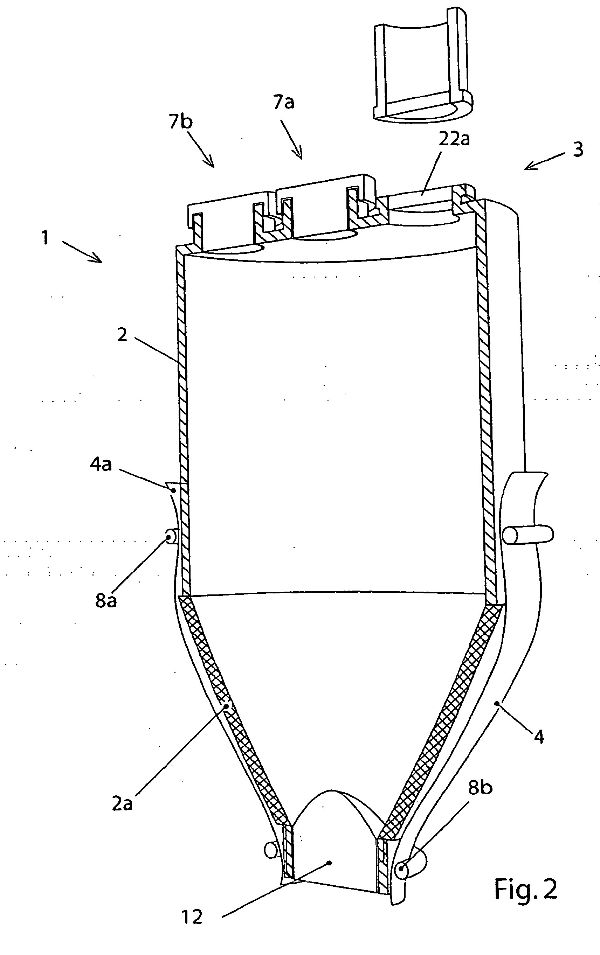

Fig. 2 zeigt das Annähern eines Füllstutzens von außen an den Einlauf 3, der in Fig. 2 noch durch den Stopfen 22a geschlossen ist.

In Bild 3 sitzt der Füllstutzen bereits dicht auf dem Einlauf 3 auf, der immer noch geschlossen ist.

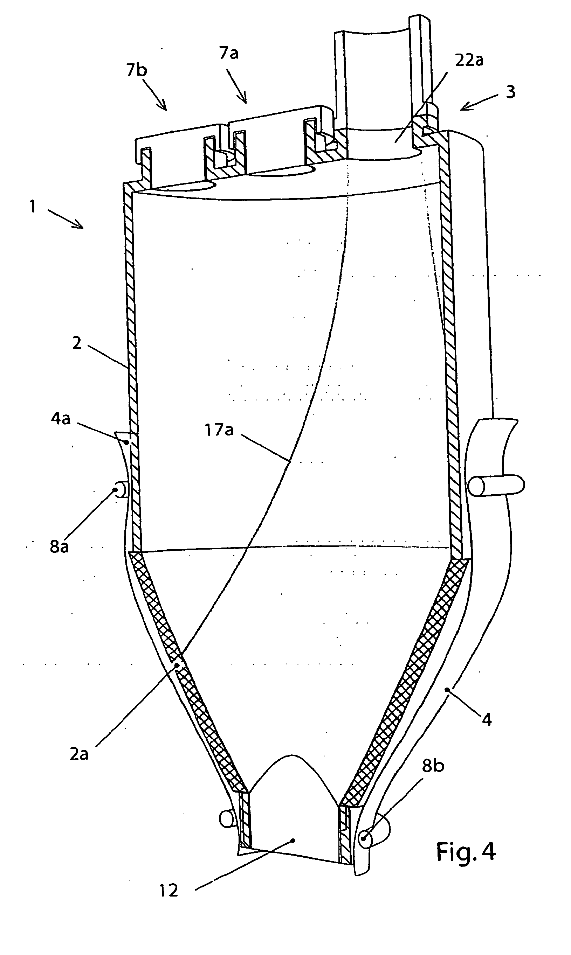

Anschließend wird der Verschlussstopfen 22a des Einlaufes 3 geöffnet und ggf. auch der Verschlussstopfen des Einfüllstutzens, falls dieser separat verschlossen ist, und gemäß Fig. 4 die erste Komponente 17a in die Trommel 2 eingefüllt, wobei alle anderen Öffnungen der Trommel 2 vorzugsweise geschlossen sind.

Nacheinander werden nun die einzelnen Komponenten der herzustellenden Mischung 17 über den Einlauf 3 eingefüllt, wofür möglicherweise das Wechseln des Einlaufstutzens notwendig wird, was dann jeweils in der Form geschieht, dass der Einlaufstutzen vom Einlauf 3 erst entfernt wird, wenn dieser durch seinen Verschlussstopfen 22a wieder dicht verschlossen ist.

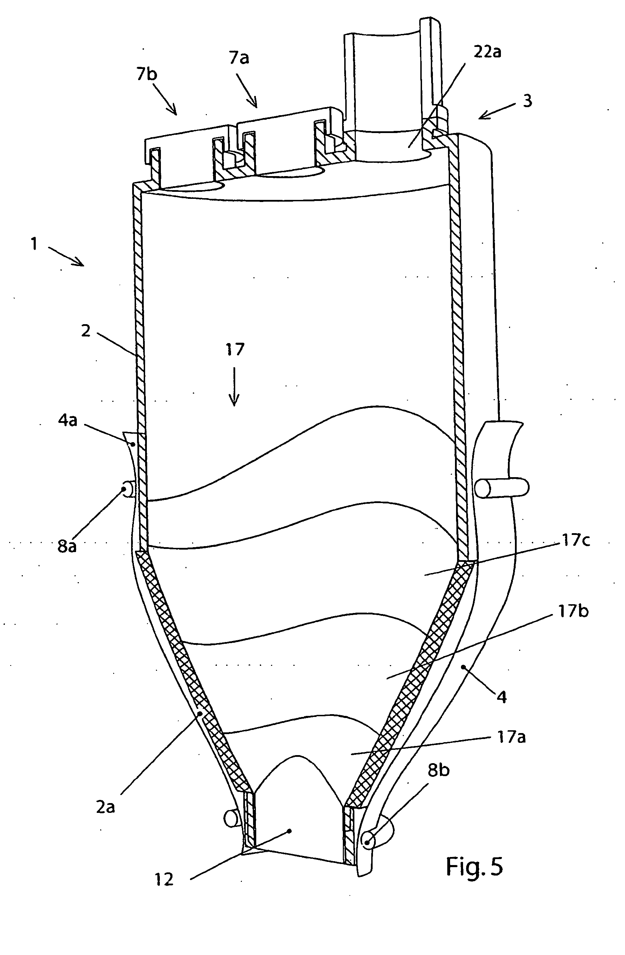

Wenn auf diese Art und Weise die einzelnen Komponenten eingefüllt sind, wie in Fig. 5 dargestellt, wird der Einlauf 3 wieder durch den Verschulssstopfen 22a verschlossen und dann der Einfüllstutzen entfernt, so dass - wie in Bild 6 dargestellt - dann immer noch die einzelnen Komponenten im Wesentlichen schichtweise übereinander in der Trommel 2 lagern.

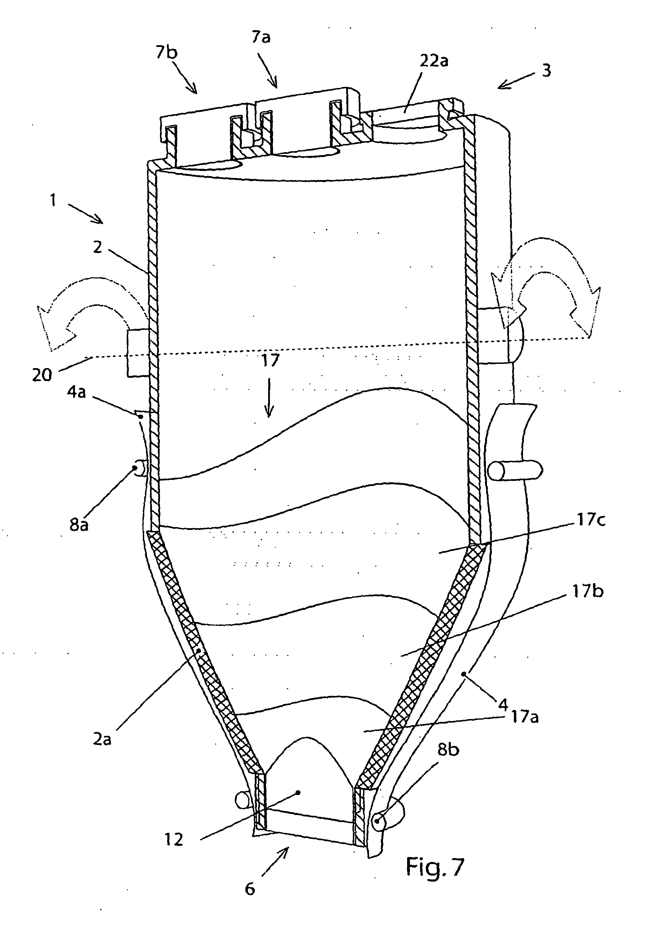

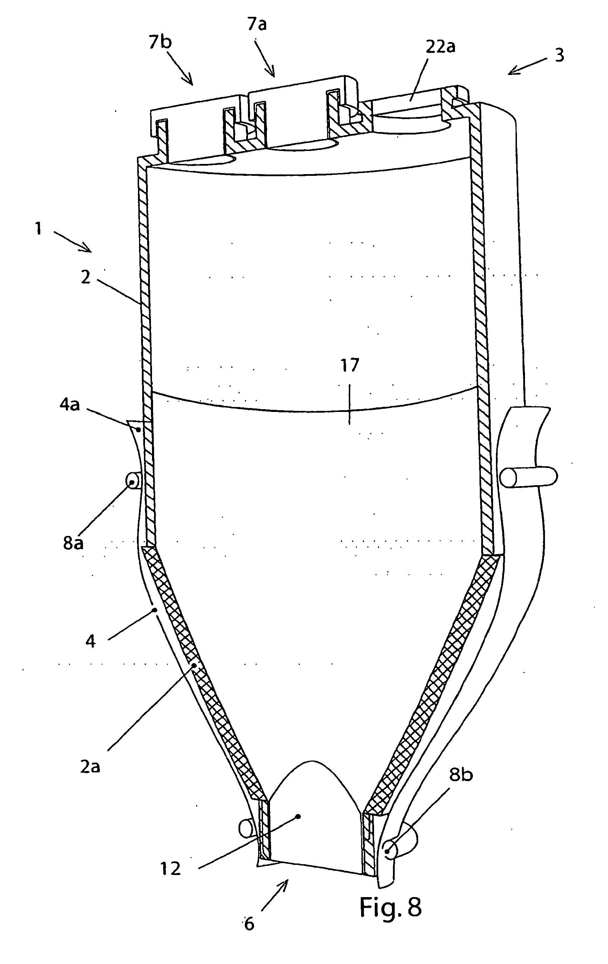

Anschließend wird gemäß Fig. 7 eine Grobvermischung der Mischung 17 durchgeführt, indem die Trommel 2 um ihre Rotationsachse 20 rotiert und/oder eine Taumelbewegung durchführt, um eine möglichst gleichmäßige grobe Durchmischung des Inhaltes der Trommel herbeizuführen, wie abschließend in Fig. 8 dargestellt.

Häufig soll nun diese grob durch mechanische Schwenkbewegung hergestellte Mischung 17 noch feiner durchmischt werden, und zwar mittels des Einblasens von Luft durch die teilweise durchlässigen Wandbereiche 2a hindurch.

Eine so eingeblasene Luft muss aus der ansonsten geschlossenen Trommel 2 entweichen können. Zu diesem Zweck soll ein Filtereinsatz 28 auf den Anschlussstutzen 7b aufgesetzt werden.

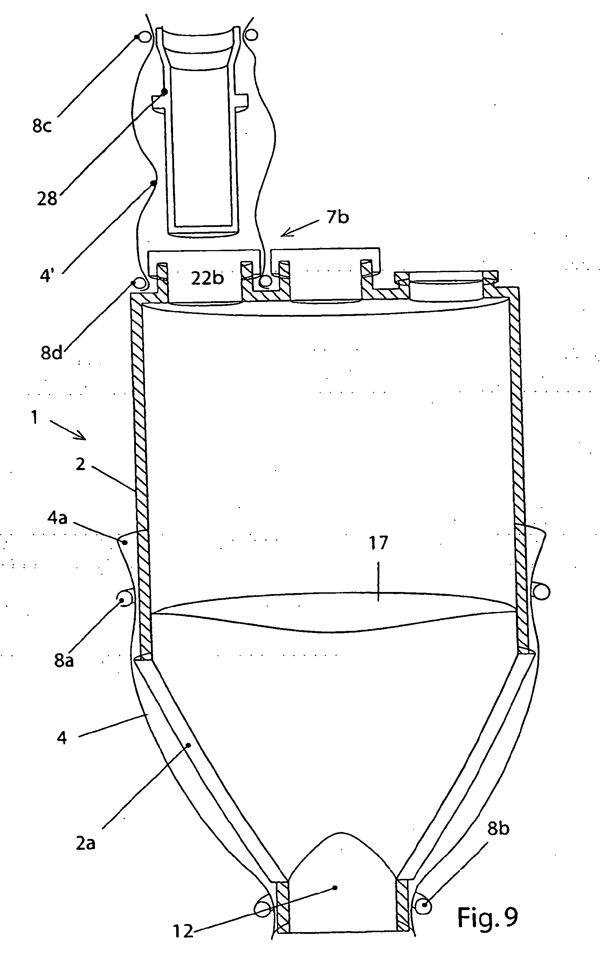

Fig. 9 zeigt das Anordnen des Filtereinsatzens 28 nahe diesem Anschlussstutzens 7b, der noch durch einen Verschlussstopfen 22b verschlossen ist. Noch bevor dieser Verschlussstopfen 22b des Anschlussstutzens 7b geöffnet wird, wird eine wiederum schlauchförmige Folie 4' einerseits am Außenumfang des Anschlussstutzens 7b und andererseits am Außenumfang des davon abgewandten Endes des Filtereinsatzes 28 dicht umlaufend wiederum mittels einer geeigneten Klemmvorrichtung 8c, d befestigt.

Der im Anschussstutzen 7b befindliche Verschlussstopfen 22b befindet sich damit ebenfalls innerhalb der Folie 4' und deren beiden umlaufenden Befestigungen.

Anschließend wird gemäß Bild 10 erst der Verschlussstopfen 22b geöffnet, und zwar so, dass er nach wie vor innerhalb der Folie 4' und ihrer beiden umlaufenden Befestigungsbereiche gelagert werden kann, wofür die Folie 4' natürlich vom Durchmesser und auch von der axialen Länge ausreichend dimensioniert sein muss. In der Regel erfolgt die Betätigung des Verschlussstopfens 22b von außen gesteuert über eine hier nicht dargestellte Mechanik.

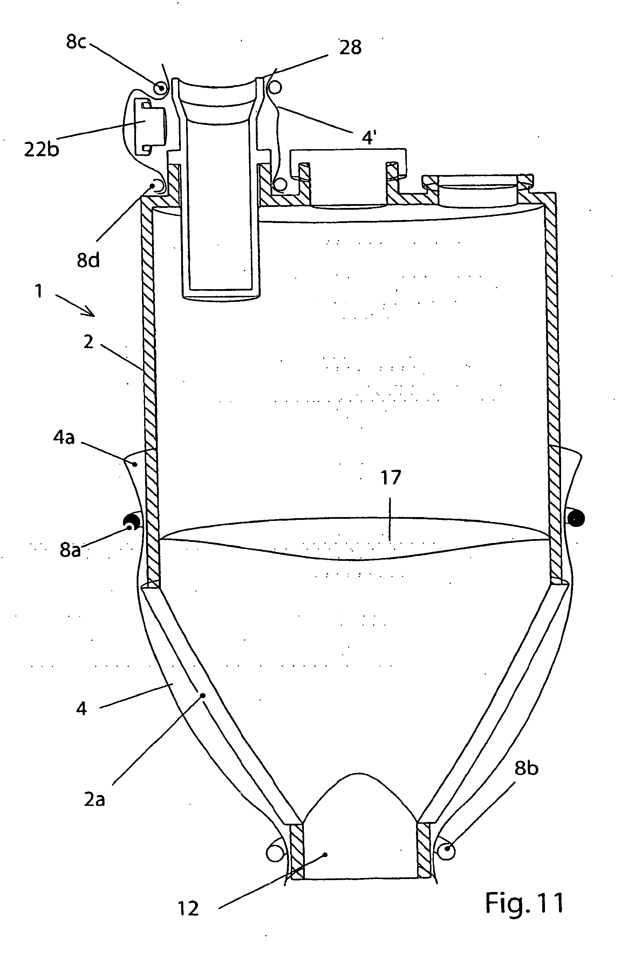

Anschließend wird der Filtereinsatz 28 gemäß Fig. 11 dicht auf den Anschlussstutzen 7b aufgesetzt und fixiert. Wenn nun später Luft aus dem Inneren der Trommel 2 durch den Filtereinsatz 28 austritt, bleiben die Bestandteile der Mischung 17 im Filtereinsatz 28 zurück, und falls beim Öffnen des Anschlussstutzen 7b und Aufsetzen des Filtereinsatz 28 Bestandteile der Mischung 17 aus dem offenen Anschlussstutzen 7b gelangt sind, befinden sich diese innerhalb der dicht anliegenden und umlaufenden Folie 4'.

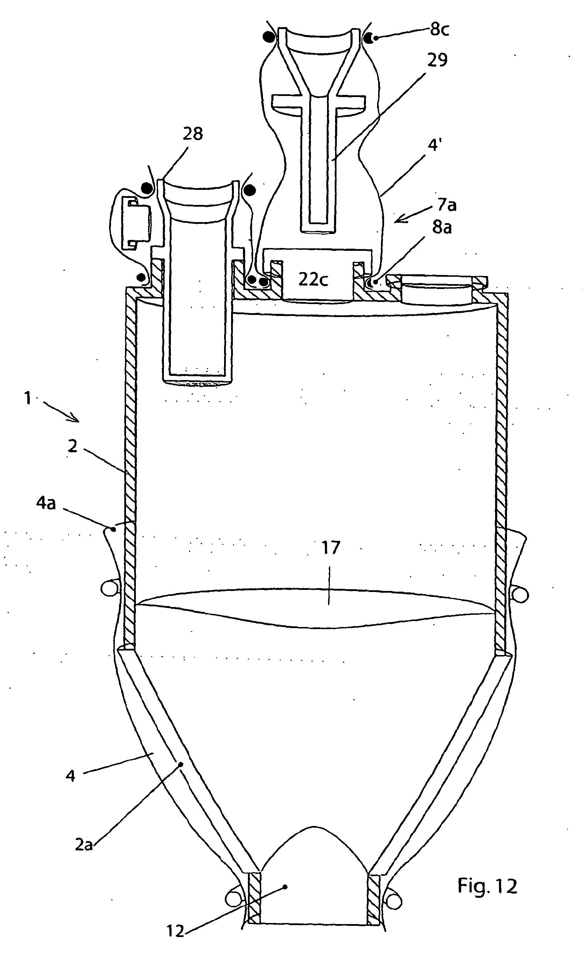

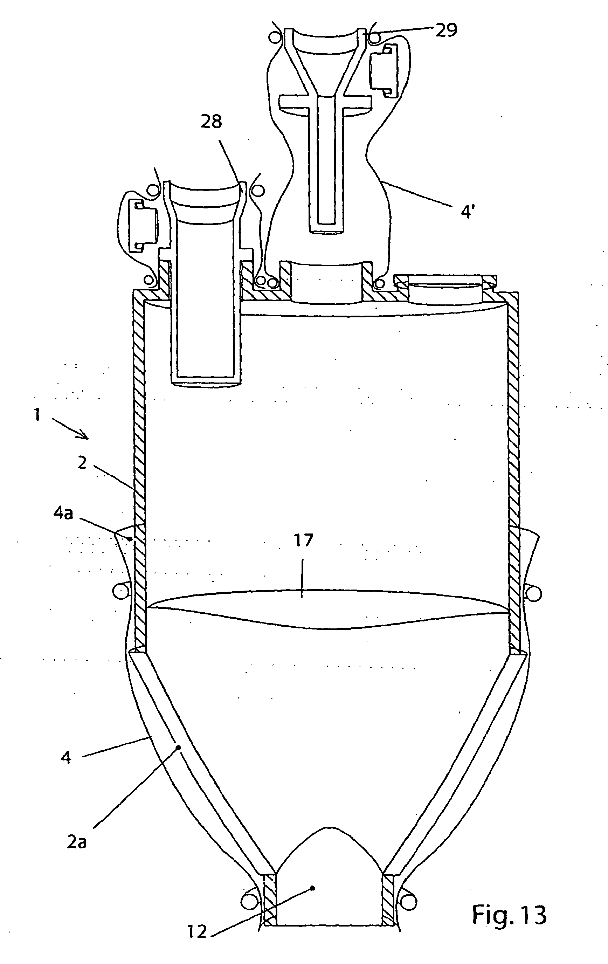

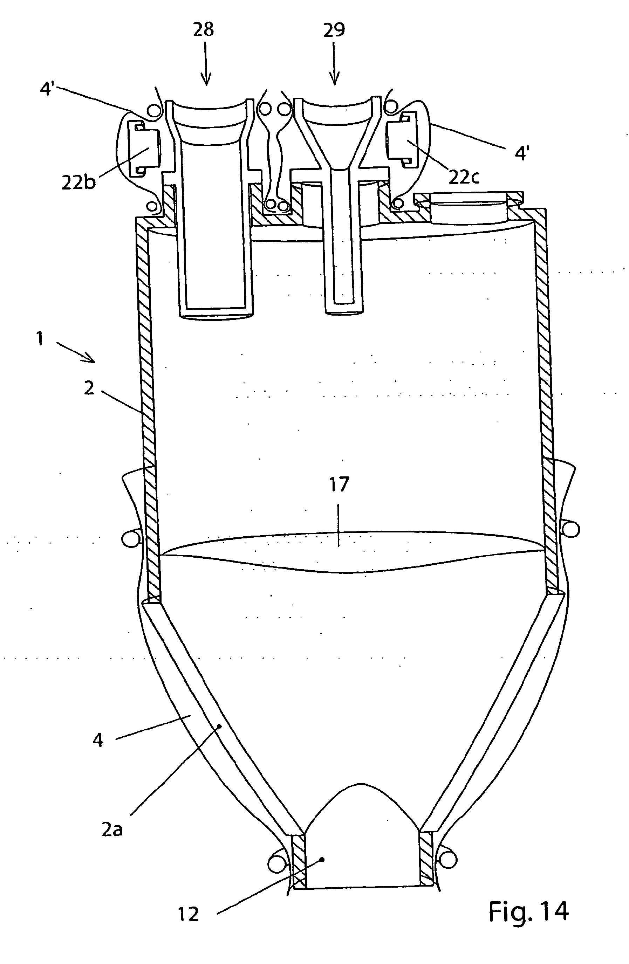

In den Fig. 12 bis 14 ist dargestellt, wie auf die analog gleiche Weise ein Beschickungsstutzen 29 auf den hierfür vorgesehen Anschlussstutzens 7a aufgesetzt wird, dessen Stutzen danach in der Regel eine bestimmte Länge ins Innere der Trommel 2 vorsteht.

Der Beschickungsstutzen 29 dient meistens dem Einbringen von Flüssigkeiten ins Innere der. Trommel 2, und weist zu diesem Zweck am Umfang des Stutzens und auch an der vorderen Stirnfläche Austrittsöffnungen oder Austrittsdüsen auf, um entweder Flüssigkeit in die pulverförmige Mischung 17 einzubringen und dadurch eine Granulierung zu bewirken, wenn zusätzlich Luft ins Innere der Trommel 2 geblasen wird, oder ein bereits erzeugtes Granulat an der Außenfläche der Granulatkörner mit einer Beschichtung, etwa einem Gleitmittel, zu versehen, was häufig im pharmazeutischen Bereich benötigt wird.

Der Ablauf hinsichtlich der Befestigung der Folie 4' und dem Zeitpunkt des Öffnens des Verschlussstopfens 22c ist hier der gleiche wie am Beispiel des Filtereinsatzes 28 erläutert.

Das Einblasen von Luft ins Innere der Trommel über die durchlässigen Wandbereiche 2a erfolgt zur Feindurchmischung der Mischung 17 oder zum Granulieren der Mischung 17.

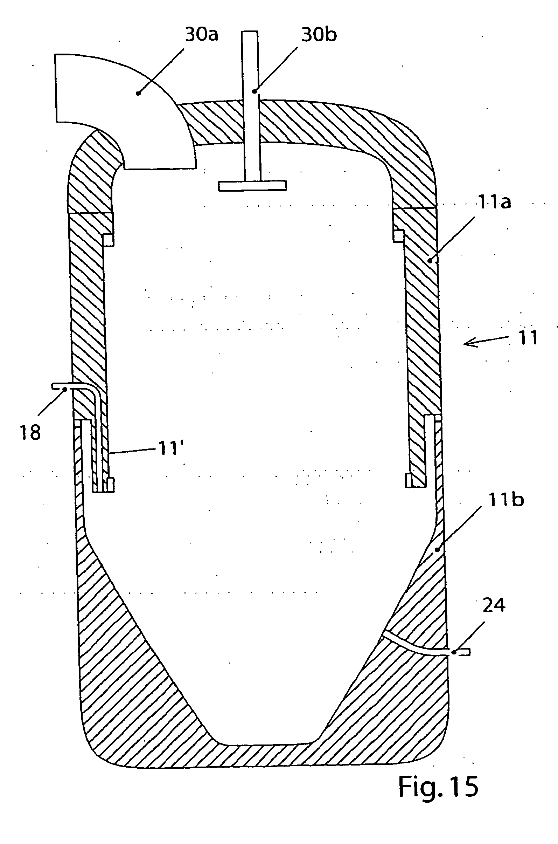

Dies erfolgt in der Regel im Inneren eines Schutzbehälters, insbesondere eines Druckbehälters 11, wie er einzeln in den Fig. 15 (geschlossen) und 16 (offen) dargestellt ist.

Ein solcher Druckbehälter 11 soll im Fall einer Staubexplosion in der Trommel 2 den dabei entstehenden Explosionsdruck aufnehmen und abfangen, was die Trommel 2 auf Grund einer weniger stabilen Bauweise nicht kann, zumal wenn die Trommel möglicherweise nicht als wieder verwendbares Teil sondern als einmalverwendbares und zu entsorgendes Teil und damit wenig stabil ausgeführt ist.

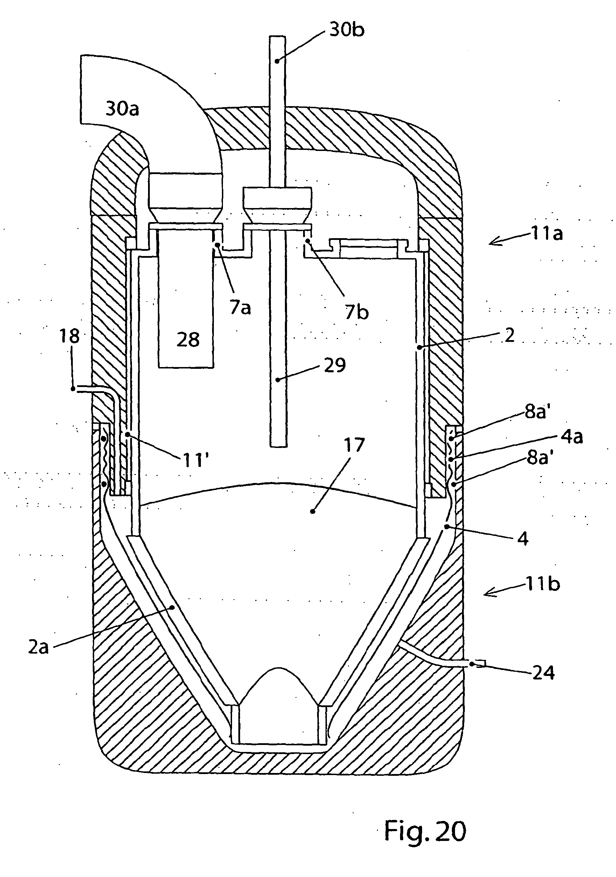

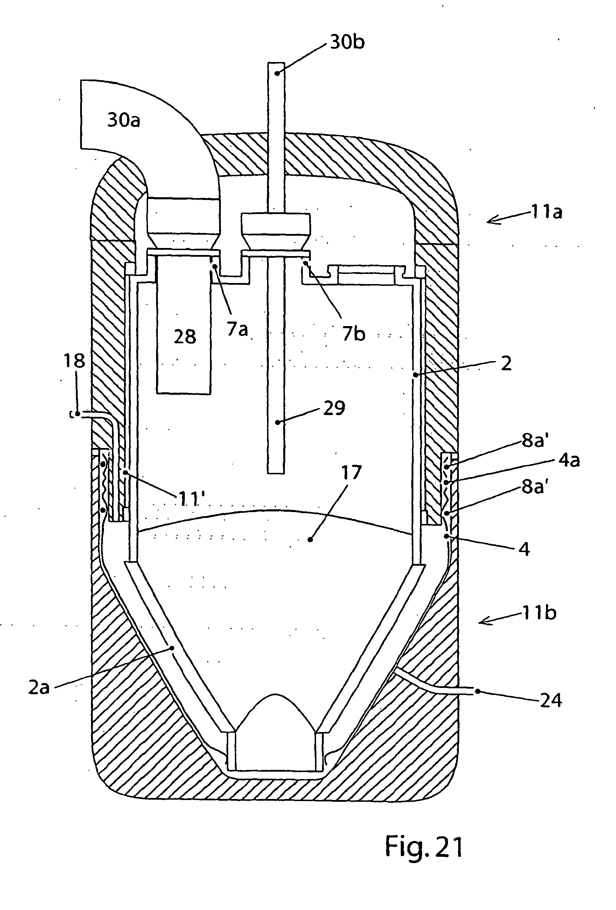

Der Druckbehälter 11 ist etwa zylindrisch als Hohlkörper gestaltet, dessen Inneres so dimensioniert ist, dass die Trommel 2 in den Druckbehälter 11 hinein passt, wie in Fig. 20 und 21 zu erkennen.

Der Druckbehälter 11 besteht aus einem Oberteil 11 a und einem Unterteil 11 b, die dicht gegeneinander fixiert werden können.

Im Oberteil 11a sind Anschlussadapter 30a, b für diejenigen Anschlussteile passend vorhanden, die an der Trommel 2 an den Anschlussstutzen 7a, b vorhanden sein können, also beispielsweise einem oder mehreren Filtereinsätzen 28 und einem Beschickungsstutzen 29, wofür in dem Druckbehälter 11 die passenden Zu- und Abführleitungen vorhanden sind, die natürlich dicht auf die entsprechenden Anschlussteile der Trommel 2 aufsetzbar sein müssen.

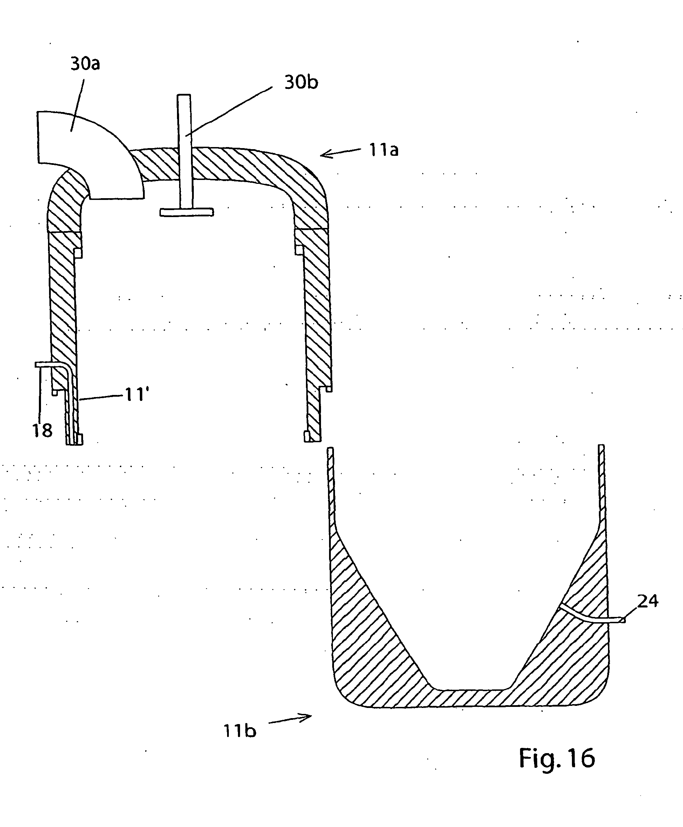

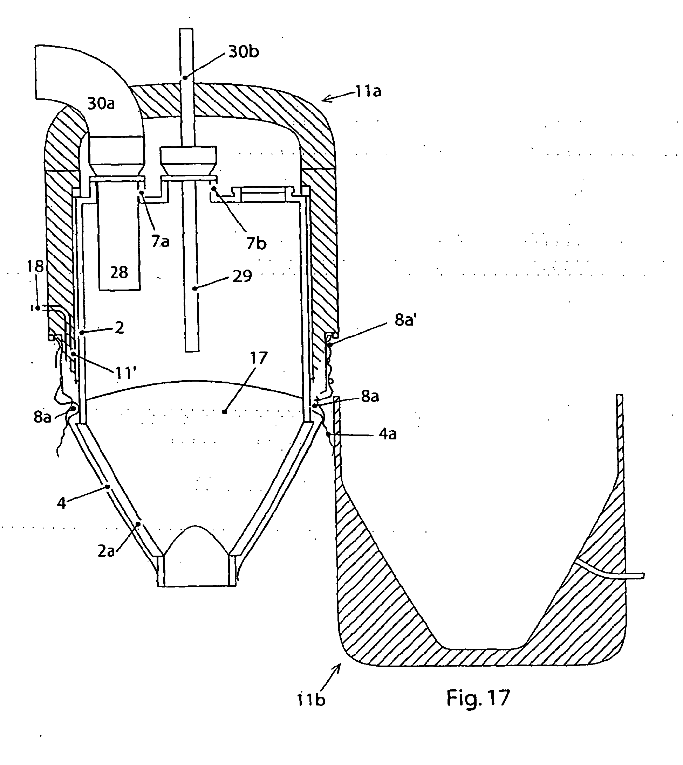

In Fig. 16 sind Oberteil 11a und Unterteil 11 b bereits getrennt nebeneinander dargestellt, so dass gemäß Fig. 17 nunmehr die Trommel 2 mit ihrer oberen Stirnseite mit den Anschlussstutzen 7a, b voran ins Oberteil 11 eingesetzt werden kann, wofür zur Positionierung entsprechende Anschläge in dem Oberteil 11a vorhanden, sind.

Das Oberteil 11a endet dabei auf der Außenseite der Trommel 2 knapp oberhalb der oberen Klemmvorrichtung 8a, mit der die Folie 4 an der Außenfläche 4 der Trommel 2 oberhalb der teilweise durchlässigen Wandbereiche 2a befestigt ist und der Überstand 4a der Folie 4' ist über diese Klemmvorrichtung 8a nach außen und unten geklappt, um eine Kollision mit dem unteren Rand des Oberteiles 11 a zu vermeiden.

Der untere Rand des Oberteiles 11a ist als Ringflansch 11' ausgebildet, dessen Außendurchmesser kleiner ist als der Außendurchmesser des übrigen Druckbehälters 11.

In dieser Durchmesserdifferenz wird später das obere ringförmige freie Ende des Unterteiles 11 b des Druckbehälters 11 gegen das Oberteil 11a angesetzt, wie in Fig. 20 dargestellt.

Zuvor wird allerdings der nach unten geklappte Überstand 4a der Folie 4 nach oben auf diesen Ringflansch 11' gelegt und mit einer weiteren Klemmvorrichtung 8a' dort nahe am oberen Ende der Schlauchförmigen Folie 4 befestigt.

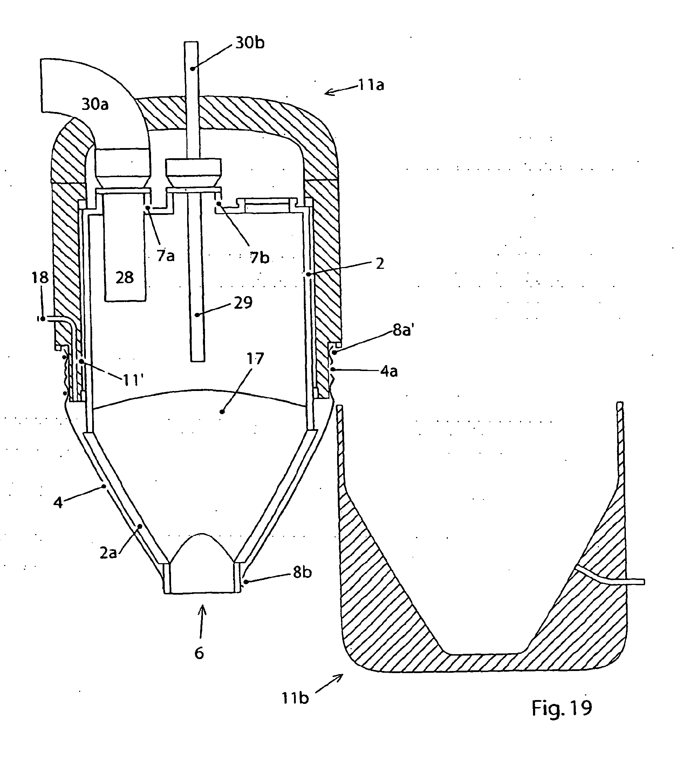

Vorzugsweise werden zwei solcher geeigneten Klemmvorrichtungen 8a' axial übereinander nahe des unteren und oberen Endes des Ringflansches 11' angebracht und anschließend - gemäß Fig. 19 - die Klemmvorrichtung 8a, die die Folie am Außenumfang der Trommel 2 oberhalb der teilweise durchlässigen Wandbereiche 2a hielt, gelöst.

Bei diesen Klemmvorrichtungen 8a, 8a' und 8b kann es sich um unterschiedliche Arten von Klemmvorrichtungen handeln, sofern sie nur jeweils die Folie 4 umlaufend dicht an dem gewünschten Außendurchmesser halten. Es kommen z. B. in Frage entsprechend dimensionierte O-Ringe 5 oder auch umlaufende Spanngurte.

Anschließend wird gemäß Fig. 20 das Unterteil 11 b des Druckbehälters 11 gegen das Oberteil 11 a angesetzt, so dass sich nunmehr die gesamte Trommel 2 einschließlich der Folie 4 und auch der Folien 4' - die in den Figuren 16 ff aus Vereinfachungsgründen nicht mehr eingezeichnet sind, aber gleichwohl einschließlich ihrer Klemmvorrichtungen vorhanden sind - innerhalb des Druckbehälters 11 befinden.

Fig. 21 zeigt, wie über einen Unterdruckanschluss 24 im Unterteil 11 b im Bereich der Folie 4 Unterdruck an den Innenraum des Druckbehälters 11 angelegt wird und dadurch die Folie 4 vor allem im Bereich der teilweise durchlässigen Wände 2a der Trommel 2 nach außen an den Innenumfang des Unterteils 11 b des Druckbehälters 11 gesogen wird.

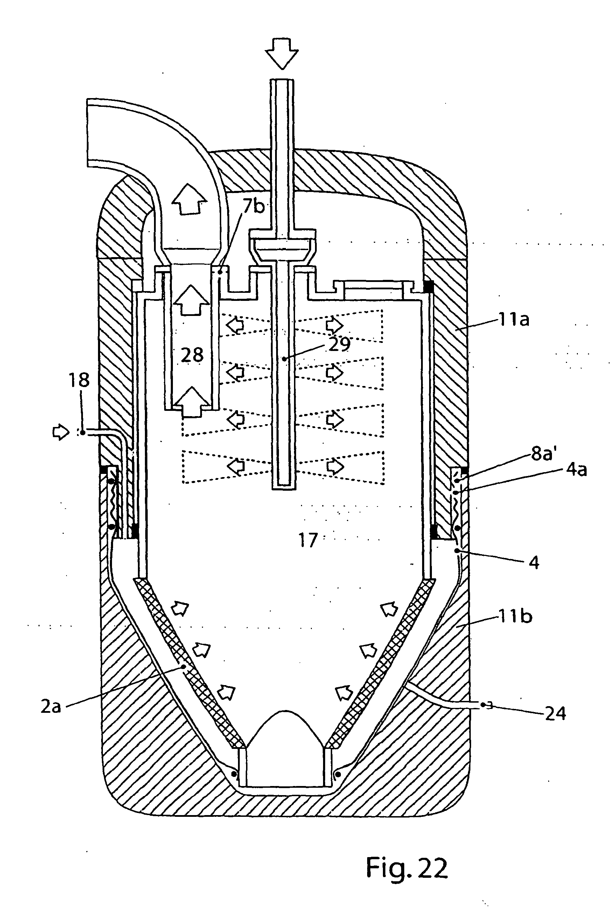

Dies ist notwendig, um anschließend - wie in Fig. 22 dargestellt - über einen Lufteinlass 18, der im stirnseitigem Ende des Ringflansches 11' des Oberteiles 11a mündet, Luft in großer Menge einströmen zu lassen, und zwar über den nunmehr vorhandenen Abstand zwischen der Folie 4 und dem teilweise durchlässigem Wandbereich 2a ohne Behinderung durch die Folie 4 zu dem teilweise durchlässigen Wandbereich 2a und durch diesen hindurch ins Innere der Trommel 2.

Die dabei ins Innere der Trommel 2 eingepresste Luft muss entweichen, in diesem Fall über den Anschlussstutzen 7b und den darin eingesetzten Filtereinsatz 28 in die Umgebung, wobei die Bestandteile der Mischung 17 in der Trommel verbleiben, zurückgehalten vom Filtereinsatz 28.

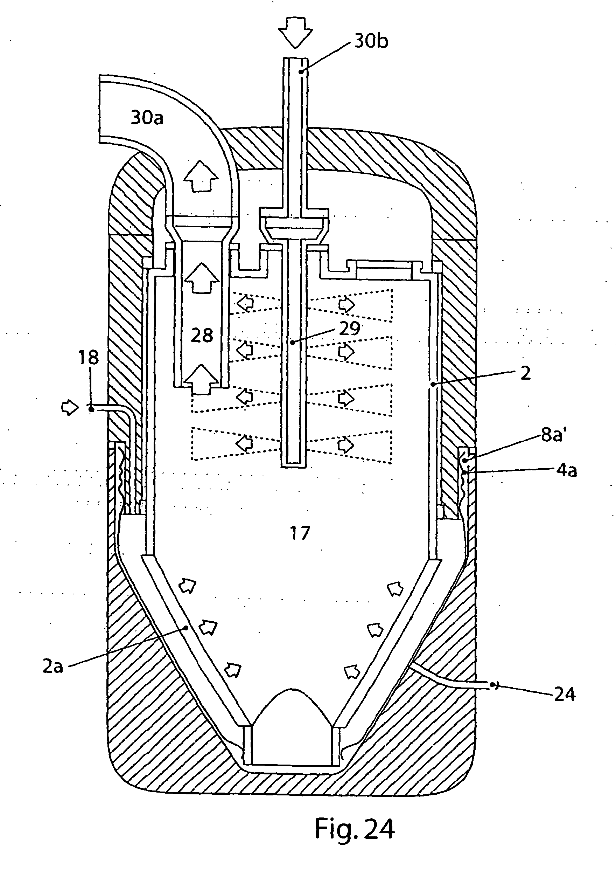

Fig. 24 zeigt, wie der Inhalt 17 des Mischers mittels Durchführung von Trocknungsluft von den durchlässigen Wandbereichen 2a zum Filterstutzen 28 getrocknet werden kann.

Fig. 24 zeigt, wie zusätzlich während des Lufteinblasens durch den Beschickungsstutzen 29 ein Zusatzstoff, etwa Feuchtigkeit zum Granulieren und/oder ein feuchtes Gleitmittel, eingebracht wird.

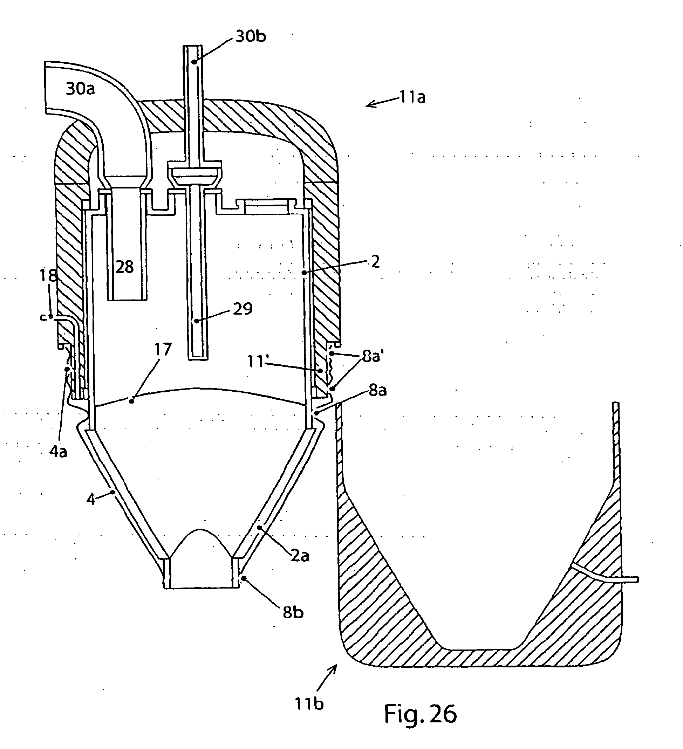

Wenn alle gewünschten Vorgänge im Inneren der Trommel 2 beendet sind, wird gemäß Bild 25 das Unterteil 11 b des Druckbehälters 11 vom Oberteil 11a abgenommen, und gemäß Fig. 26 die obere Klemmvorrichtung 8a wieder angelegt, mit der Folie 4 am Außenumfang der Trommel 2 oberhalb der teilweise durchlässigen Wandbereiche 2a umlaufend dicht befestigt wird.

Anschließend - und dies ist einer der wichtigsten erfindungsgemäßen Schritte - wird die Trommel 2 aus dem Oberteil 11a des Druckbehälters 11 herausbewegt, ohne die untere Klemmvorrichtung 8b sowie die oberste Klemmvorrichtung 8a' der Folie 4 an der Trommel 2, also nahe dem Auslauf 6 einerseits und dem Ringflansch 11' andererseits, zu lösen. Gelöst wird ggf. - falls in axialer Richtung zwei Klemmvorrichtungen 8a' übereinander vorhanden waren, die Untere, nahe des freien Ende des Ringflansches 11' befestigte Klemmvorrichtung 8a'.

Hierfür muss die Folie 4 natürlich in axialer Richtung 10 ausreichend lang dimensioniert sein, um einerseits mit der oberen Befestigung der Folie 4 durch die Klemmvorrichtung 8a' am Oberteil 11a des Druckbehälters befestigt zu bleiben und andererseits damit die untere Klemmvorrichtung 8b am unteren Ende der Trommel 2 befestigt bleibt.

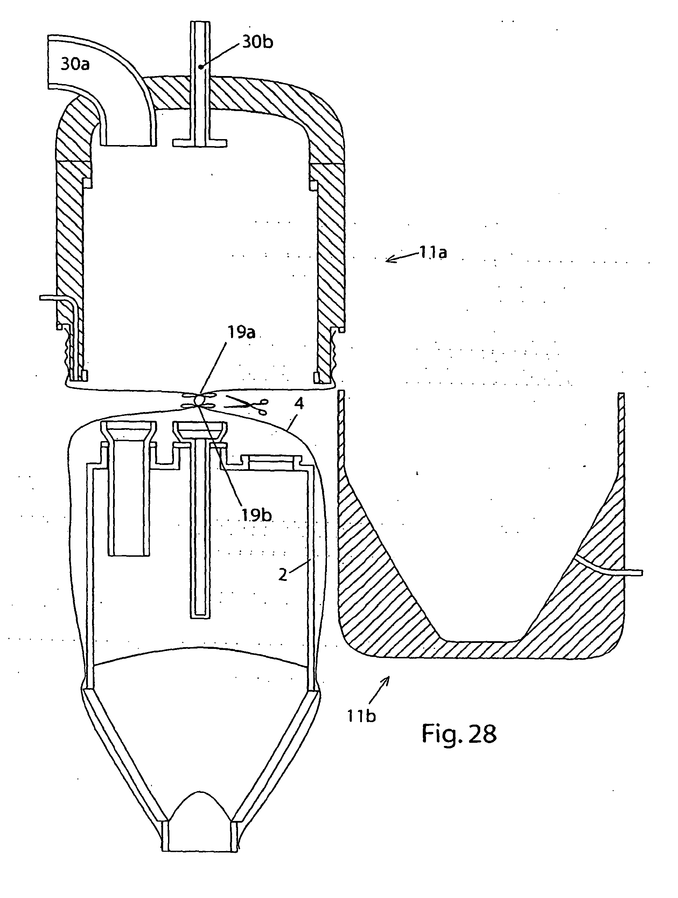

Vor allem ist eine große axiale Länge der schlauchförmigen Folie 4 notwendig damit - wie in Fig. 28 dargestellt - anschließend die schlauchförmige Folie 4 zwischen dem Oberteil 11a des Druckbehälters 11 und der in der Folie eingeschlossenen Trommel 2 radial dicht zusammengepresst und an zwei Schließstellen 19a, b verschlossen und anschließend zwischen den Schließstellen abgetrennt werden kann.

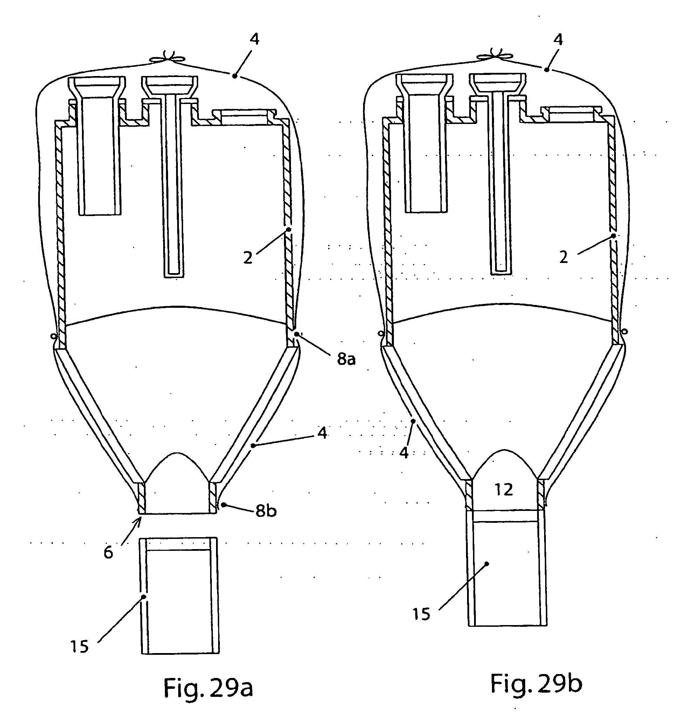

Dann liegt die Trommel 2 dicht eingeschlossen in der Folie 4 als separat handhabbares Teil vor und kann beispielsweise mit ihrem Auslauf 6 nach unten an einen Abführstutzen 15 angenähert werden und aufgesetzt werden, wie in Figur29a, b dargestellt.

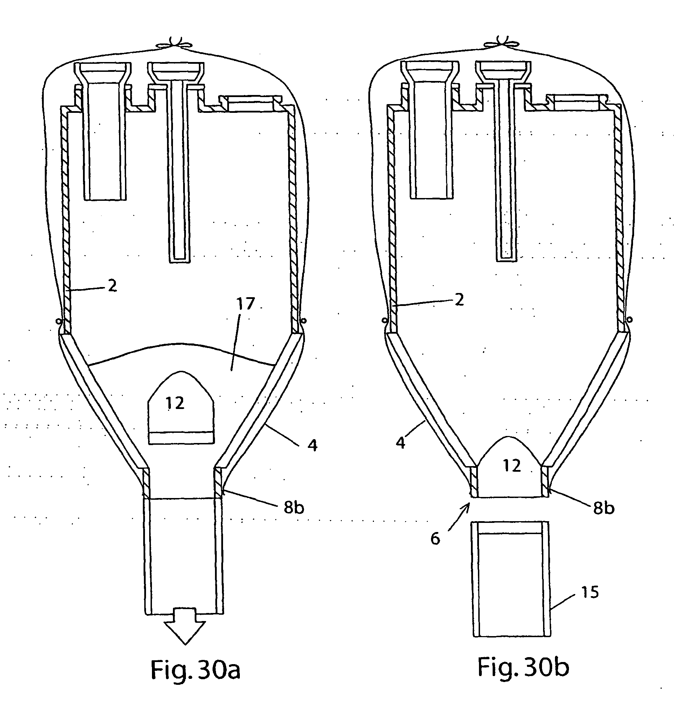

Nach dem dichten Aufsetzen auf den Abführstutzen 15 kann der Auslaufverschluss 12, ggf. zusammen mit dem Verschlusssystem des Abführstutzens 15, geöffnet werden, in dem in der Regel der Auslaufverschluss 12 axial in die Trommel 2 hinein bewegt wird, so dass seitlich indem Abstand zwischen Auslaufverschluss 12 und der umgebenden Wandung der Trommel 2 die erzeugte Mischung 17 in den Abführstutzen 15 herauslaufen kann wie in Fig. 30a dargestellt, und anschließend der Auslaufverschluss 12 den Auslauf 6 wieder dicht verschließen kann und die wieder verschlossene Trommel 2 von dem Abführstutzen 15 getrennt werden kann (Fig. 30b).

All dies ist möglich, da der Auslauf 6 der Trommel 2 nicht von der Folie 4 versperrt wird, sondern die Folie 4 mit ihrer unteren Klemmvorrichtung 8b lediglich auf dem Außenumfang des den Auslauf 6 bildenden Stutzens anliegt und kurz darunter endet.

Damit ist die kontaminationsfreie Beschickung als auch Entleerung der Trommel 2 beendet und die Trommel 2 kann - sofern es sich um ein wieder verwendbares Teil handelt - in dem in der Folie 4 eingeschlossenen Zustand einer Aufbereitungs- und Reinigungsstation zugeführt werden oder - wenn es sich um nur einmal verwendbare Trommel 2 handelt - einer Kontaminationsfreien Entsorgung zugeführt werden.

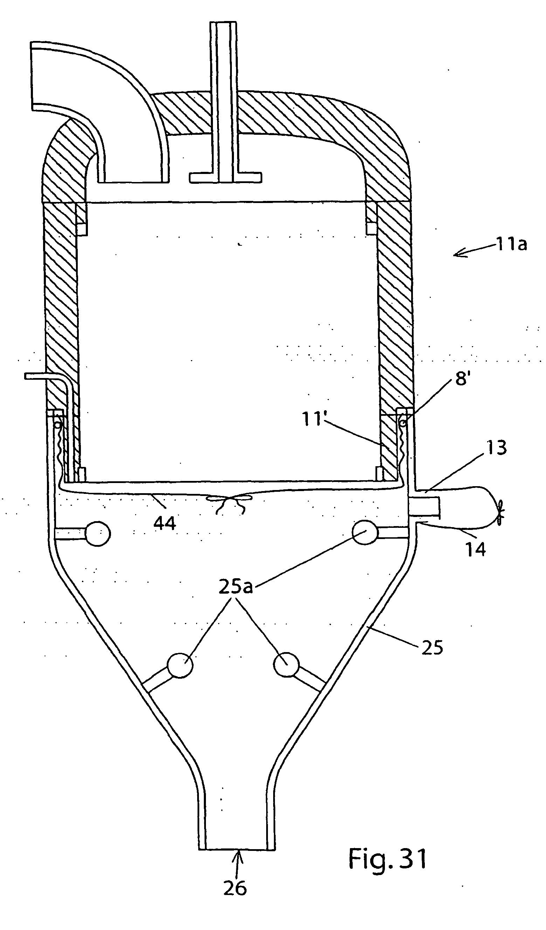

Was jedoch auf jeden Fall wieder verwendet werden soll, ist der Druckbehälter 11, dessen Oberteil 11a somit gereinigt und für die Wiederverwendung vorbereitet werden muss, was in den Figuren 31 und folgende dargestellt ist:

Am Ringflansch 11' des Oberteiles 11a befindet sich nach wie vor die Restfolie 44, die ja theoretisch auf ihrer Innenseite kontaminiert sein könnte.

Gemäß Fig. 31 wird auf die offene Seite des Oberteiles 11a des Druckbehälters 11 eine Reinigungshaube 25 von unten her angesetzt die über eine eingebaute Spülvorrichtung 25a verfügt und einen Auslauf 26 für die Reinigungsflüssigkeit.

Ferner verfügt die Reinigungshaube 25 über eine Entsorgungsöffnung 13 die so positioniert ist, dass bei auf dem Oberteil 11a aufgesetzter Reinigungshaube 25 mit einer Hand durch die Entsorgungsöffnung nach innen gegriffen und die Restfolie 44 herausgezogen werden kann, ggf. nach dem Öffnen der oberen Klemmvorrichtung 8'.

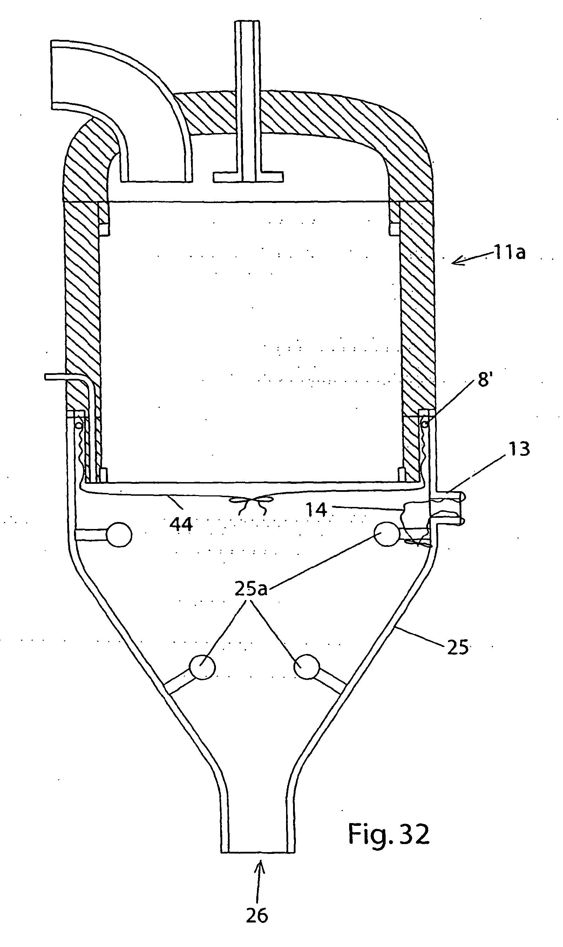

Natürlich geschieht dies nicht (siehe Fig. 32) mit der blanken Hand, sondern unter Verwendung eines Entsorgungsbeutels 14, der mit seiner offenen Seite dicht auf der Außenseite der Entsorgungsöffnung 13 befestigt ist, und durch Umstülpen nach innen im Inneren der Reinigungshaube 25 für die beschriebenen Tätigkeiten wie ein Handschuh benutz werden kann.

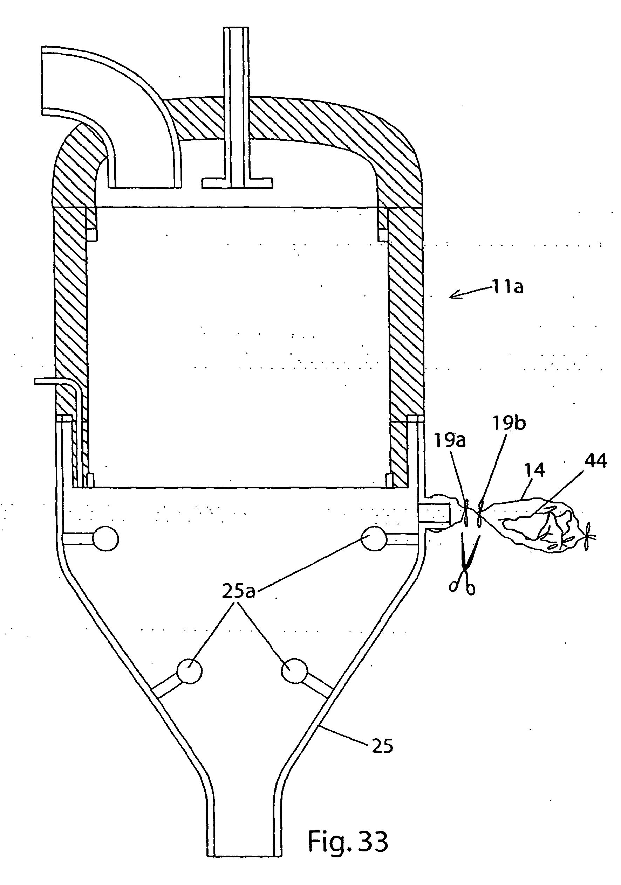

Nach dem Herausziehen der Restfolie 44 befindet sich diese - wie in Fig. 33 dargestellt - im Inneren des Entsorgungsbeutels 14, so dass der Entsorgungsbeutel 14 zwischen der Entsorgungsöffnung 13 und dem der darin aufgenommenen Restfolie 44 wiederum radial dicht verschlossen werden kann, vorzugsweise an zwei beanstandeten Schließstellen 19a, b, und dazwischen abgetrennt werden kann, so dass die nunmehr dicht eingeschlossene Restfolie 44 als separates Teil gehandhabt oder entsorgt oder weiterbehandelt werden kann.

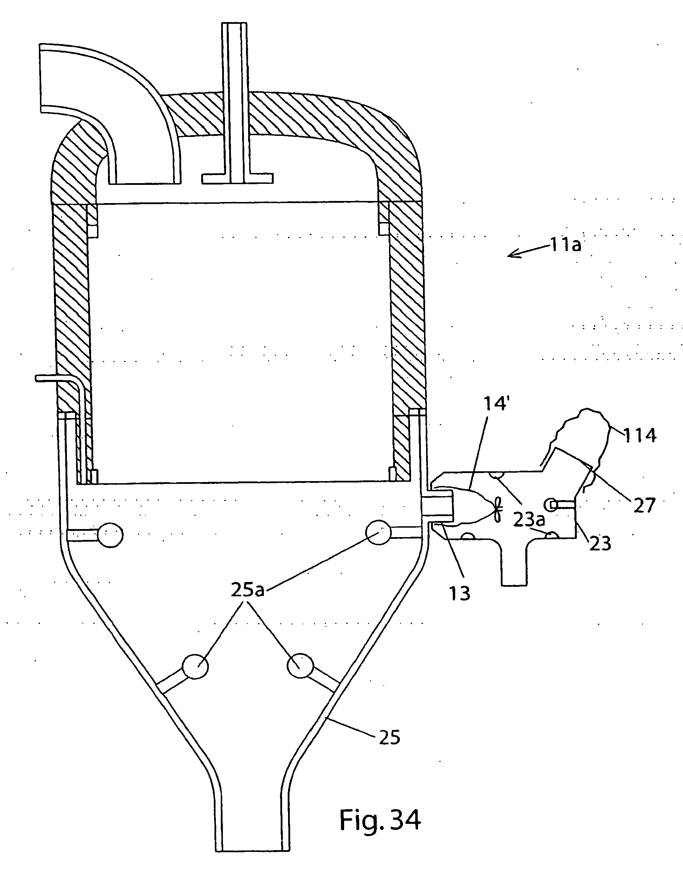

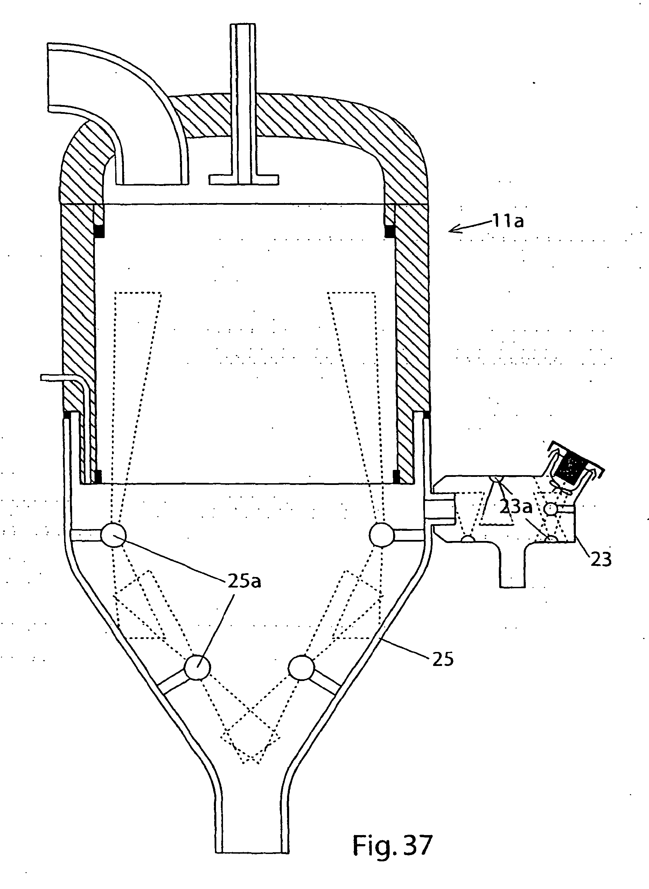

Befürchtet man, dass der an der Entsorgungsöffnung 13 verbliebene Restbeutel 14' ebenfalls noch kontaminiert ist, kann in einem weiteren Schritt auch dieser Restbeutel 14' kontaminationsfrei entsorgt werden, wie in den Figuren 34 - 37 dargestellt.

Eine Dekontaminationsvorrichtung 23 wird (Fig. 34) auf den Stutzen der Entsorgungsöffnung 13 und auch über den Restbeutel 14' passgenau und dicht aufgesetzt. Diese Vorrichtung 23 besitzt gegenüber liegend vom Stutzen 23 eine Eingreiföffnung 27, auf der wiederum ein weiterer Entsorgungsbeutel 114 dicht aufgesetzt werden kann. In ihrem tiefsten Bereich besitzt diese Vorrichtung weiterhin einen Auslauf 126, und im Inneren der Vorrichtung 23 ist eine Spülvorrichtung 23a angeordnet.

Es wird nun wiederum mittels des Entsorgungsbeutels 114 als Handschuh in die Vorrichtung 23 hineingegriffen und der Restbeutel 14' von der Entsorgungsöffnung 13 abgezogen und aus der Vorrichtung 23 heraus ins Innere des weiteren Entsorgungsbeutels 114 gezogen.

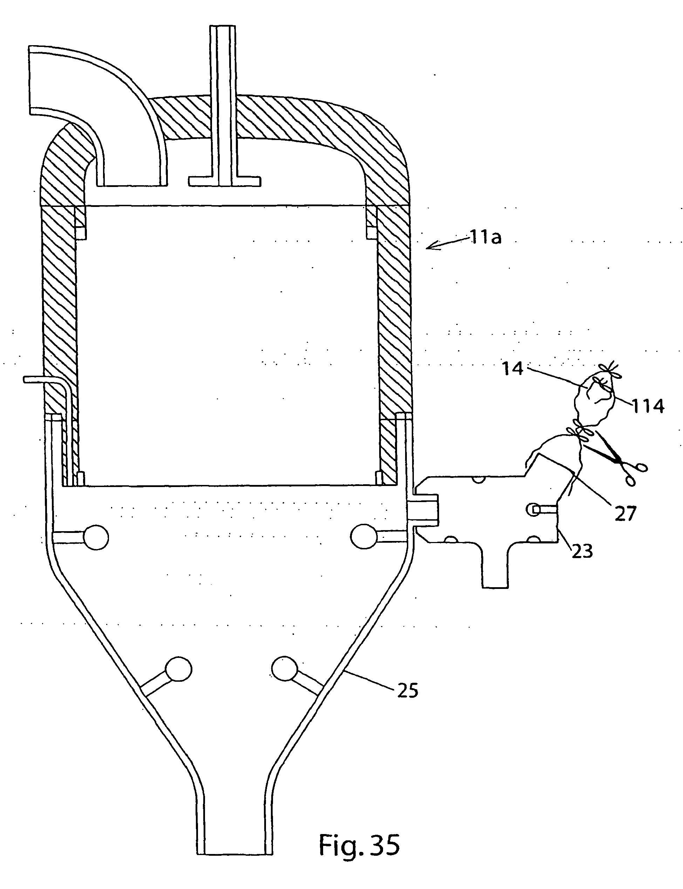

Anschließend wird der Entsorgungsbeutel 114 wiederum (Fig. 35) zwischen der Eingreiföffnung 27 und dem eingeschlossenen Restbeutel 14' dicht verschlossen und abgetrennt, wodurch der Restbeutel 14' dicht eingeschlossen ist und separat weiter behandelt werden kann.

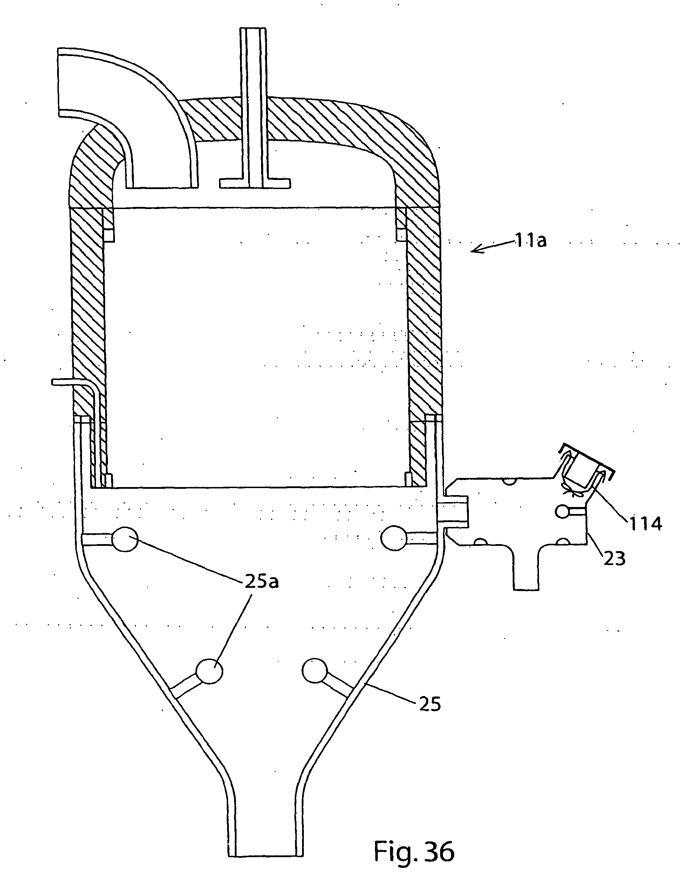

Vorzugsweise wird (Fig. 36) danach die Eingreiföffnung 27 durch einen Verschlussstopfen verschlossen, der den an der Öffnung 27 verbliebenen Restbeutel 114' konvex nach innen wölbt.

Dann kann das Innere der Dekontaminations-Vorrichtung 23 einzeln und/oder auch zusammen mit dem Inneren der Reinigungshaube 25 und damit auch des Oberteiles 11a mittels der jeweils eingebauten Spülvorrichtungen 25a, 23a gespült und damit dekontaminiert werden.

Anfallende Spülflüssigkeit wird über die Ausläufe abgeführt.

Danach stehen sowohl der Mischer 1 als auch der Druckbehälter 11 und die Dekontaminations-Vorrichtung 23 zum erneuten Einsatz zur Verfügung.

### BEZUGSZEICHENLISTE

- 1: Mischer
- 2: Trommel
- 2a: teilweise durchlässiger Wandbereich
- 3: Einlauf
- 4,4': Folie
- 4a: oberer Überstand
- 5: O-Ring
- 6: Auslauf
- 7a: Anschlussstutzen Einlauf
- 7b: Anschlussstutzen Filter
- 8a,b,c,d: Klemmvorrichtung
- 9: Deckel
- 10: axiale Richtung
- 11: Druckbehälter
- 11': Ringflansch
- 12: Auslaufverschluss
- 13: Entsorgungsöffnung
- 14, 14': Entsorgungsbeutel
- 15: Abführstutzen
- 16: Verschluss
- 17: Mischung
- 18: Lufteinlass
- 19a, b: Schließstelle
- 20: Rotationsachse
- 21: Folienstutzen
- 22: Stopfen
- 23: Dekontaminations-Vorrichtung
- 24: Unterdruckanschluss
- 25: Reinigungshaube
- 25a: Spülvorrichtung
- 26: Auslauf
- 27a,b: Verschlüsse
- 28: Filtereinsatz
- 29: Beschickungsstutzen
- 30a,b: Anschlussadapter
- 44: Restfolie
- 114: Entsorgungsbeutel
- 126: Auslauf

## Patentansprüche

1. Vorrichtung zum kontaminationsfreien Beschicken und Entleeren, insbesondere ein Mischer (1), mit
- einer Misch-Trommel (2), die
- einen Einlauf (3) und einen Auslauf (6) und
- einen wenigstens teilweise durchlässigen Wandbereich (2a) aufweist für das Einblasen von Trocknungsluft und ansonsten vollständig dicht geschlossen ist,
- einer Abdeckung, die dicht umlaufend den teilweise durchlässigen Wandbereich (2a) überspannt,
**dadurch gekennzeichnet, dass**
die Abdeckung eine flexible Folie (4) ist, die außerhalb der teilweise durchlässigen Wandbereiche (2a), insbesondere auf der Außenseite der Trommel (2), lösbar befestigt ist.

2. Vorrichtung nach Anspruch 1,
**dadurch gekennzeichnet, dass**
- sich der wenigstens teilweise durchlässige Wandbereich (2a) oberhalb des Auslaufes (6) insbesondere konusförmig erweiternd nach oben erstreckt und/oder
- die Folie (4) schlauchförmig ausgebildet ist und einerseits dicht umlaufend unterhalb und andererseits dicht umlaufend oberhalb des teilweise durchlässigen Wandbereiches (2a) insbesondere auf der Außenseite der Trommel (2) lösbar befestigt ist
und/oder
- die Vorrichtung einen Druckbehälter (11) umfasst, in den die Trommel (2) hineinpasst.

3. Vorrichtung nach Anspruch 2,
**dadurch gekennzeichnet, dass**
- die Folie (4) in axialer Richtung (10) so lang ist, dass ohne Entfernen der oberen Befestigung insbesondere an der Außenseite des Druckbehälters (11) innerhalb der Folie (4) die Trommel (2) vollständig aus dem einen Teil des Druckbehälters (11) entnommen und die Folie (4) zwischen dem Druckbehälter (11) und der Trommel (2) dicht verschlossen werden kann
und/oder
- die Folie (4) an der Trommel (2) mittels lösbarer Klemmvorrichtungen, insbesondere umlaufender Klemmvorrichtungen (8a,b), befestigt ist
und/oder
- die Klemmvorrichtungen aus einem die Folie umlaufend am außen gegen die Außenseite der Folie umlaufenden O-Ring (5) oder einem umlaufenden Spanngurt bestehen.

4. Vorrichtung nach einem der vorhergehenden Ansprüche 2 oder 3,
**dadurch gekennzeichnet, dass**
- die Folie (4) vom Bereich oberhalb des teilweise durchlässigen Bereiches (2a) zum Auslauf (6) hin konusförmig enger wird
und/oder
- die Folie (4) über den Bereich der oberen Klemmvorrichtung (8a) hinaus einen oberen Überstand (4a) aufweist
und/oder
- wenigstens der obere Überstand (4a), insbesondere der gesamte obere Bereich der Folie (4) einen größeren Durchmesser aufweist als der Außendurchmesser der Trommel (2), insbesondere einen größeren Außendurchmesser als der Außendurchmesser eines Druckbehälters (11), in welchen die Trommel (2) hineinpasst.

5. Vorrichtung nach einem der vorhergehenden Ansprüche 3 bis 4,
**dadurch gekennzeichnet, dass**
- der Auslauf (6) so gestaltet ist, dass sein Öffnen und Schließen die nahe des Auslaufs (6) liegende Befestigung, insbesondere Klemmvorrichtung (8b), der Folie (4) an der Trommel (2) nicht beeinträchtigt
und/oder
- der Auslauf (6) von einem in dem Auslaufstutzen sitzenden und diesen dicht verschließenden Auslaufverschluss (12) verschlossen wird, der insbesondere kegelförmig ausgebildet ist und in die Trommel (2) hinein verlagerbar ist und/oder
- auf der Außenseite des Druckbehälters (11) wenigstens eine weitere Klemmvorrichtung (8c, ...) vorhanden ist zum umlaufend dichten Befestigen der Folie (4) auf dem Außenumfang des Druckbehälters (11).

6. Vorrichtung nach einem der vorhergehenden Ansprüche 2 bis 5,
**dadurch gekennzeichnet, dass**
- der Druckbehälter einen Lufteinlass (18) besitzt, dessen Mündung radial zwischen dem Außenumfang der in den Druckbehälter (11) eingesetzten Trommel (2) und der Innenseite der auf der Außenseite des Druckbehälters (11) befestigten Folie (4) liegt
und/oder
- der Druckbehälter (11) im Bereich der an der eingesetzten Trommel befestigten Folie (4) einen Unterdruckanschluss (24) zum nach außen Ziehen der Folie (4) an die Innenseite des Druckbehälters (11) aufweist
und/oder
- die Folie (4) in radialer Richtung einen ausreichend großen Durchmesser aufweist, um beim Heranziehen an den Druckbehälter (11) nicht aus ihrer dichten Befestigung an der Außenseite der Trommel (2) bzw. des Druckbehälters (11) gelöst zu werden.

7. Vorrichtung nach einem der vorhergehenden Ansprüche,
**dadurch gekennzeichnet, dass**
- die Folie (4) eine thermoplastische Folie, insbesondere eine heißsiegelfähige Folie (4), ist
und/oder
- die Trommel (2), insbesondere an ihrer Oberseite, wenigstens einen Anschlussstutzen (7a, ...) aufweist und eine schlauchförmige Folie (4') dicht einerseits am Anschlussstutzen (7a, ...) und andererseits am davon abgewandten Ende des darin eingesetzten Anschlussteiles jeweils umlaufend befestigt ist und/oder
- die Schutzfolie in axialer Richtung (10) so lang ist, dass ohne Entfernen der oberen Befestigung an der Außenseite des Anschlussstutzens (7a) innerhalb der Schutzfolie (4) der Anschlussteil vollständig aus dem einen Teil des Anschlussstutzens (7a) entnommen und die Folie (4) zwischen dem Anschlussstutzen (7a) und dem Anschlussteil dicht verschlossen werden kann.

8. Vorrichtung nach Anspruch 7,
**dadurch gekennzeichnet, dass**
- die Anschlussstutzen (7a,b) von Verschlüssen (27a,b) verschließbar sind, die so gestaltet sind, dass sie bei bereits an dem Anschlussstutzen (7a) und dem Anschlussteil befestigter Folie (4') durch die Folie hindurch gelöst und innerhalb der Folie zusätzlich zu dem Anschlussteil gelagert werden können und im Anschlussstutzen (7a,...) wieder eingesetzt werden können
und/oder
- die schlauchförmige Folie (4') in axialer und/oder radialer Richtung ausreichend groß dimensioniert ist, um den Anschlussstutzen (7a, ...) verschließenden Verschluss (27a) zusätzlich zum Anschlussteil darin aufzunehmen und/oder
- das Anschlussteil ein Filtereinsatz (28) ist.

9. Vorrichtung nach einem der vorhergehenden Ansprüche 7 bis 8,
**dadurch gekennzeichnet, dass**
- das Anschlussteil ein Beschickungsstutzen (29) ist
und/oder
- der Druckbehälter (11) eine Reinigungshaube (25) zum dichten Ansetzen an den oberen Teil (11a) des Druckbehälters (11) umfasst
und/oder
- die Reinigungshaube (25) eine Spülvorrichtung (25a) aufweist.

10. Vorrichtung nach Anspruch 9,
**dadurch gekennzeichnet, dass**
- die Reinigungshaube (25) eine Entsorgungsöffnung (13) aufweist, die ausreichend groß ist zum Hindurchführen einer Faust und so nahe der Befestigung der Folie (4) am Oberteil (11a) des Druckbehälters (11) ist, dass diese mittels einer durch die Entsorgungsöffnung (13) eingeführten Hand ergriffen werden kann und/oder
- der Druckbehälter (11) eine Dekontaminations-Vorrichtung (23) umfasst zum dichten Aufsetzen auf die Entsorgungsöffnung (13)
und/oder
- die Trommel (2) eine Trommel für Einmalverwendung ist.

11. Verfahren zum Kontaminationsfreien Beschicken und Entleeren einer Vorrichtung, insbesondere eines Mischers, nach einem der vorhergehenden Ansprüche,
**dadurch gekennzeichnet, dass**
a) eine Folie (4) um den wenigstens teilweise durchlässigen Wandbereich (2a) der Trommel (2) dicht umlaufend an deren Außenumfang befestigt wird, so dass der teilweise durchlässige Bereich (2a) von der Folie (4) auf der Außenseite überspannt wird, wobei die Folie (4) oberhalb der oberen Befestigung einen oberen Überstand (4a) aufweist
b) über den geöffneten Einlass (3) nacheinander die Komponenten in die ansonsten dicht verschlossene Trommel (2) gegeben werden und der Einlauf (3) verschlossen wird,
c) der Inhalt der Trommel (2) durch Bewegen der Trommel (2) grob durchgemischt wird, insbesondere durch Drehen der Trommel (2) um ihre Rotationsachse (20) und/oder Taumeln der Rotationsachse (20),
d) die in der Folie bis auf den Auslauf (6) dicht eingeschlossene Trommel (2) auf einen zum Auslauf (6) passenden Abführstutzen (15) aufgesetzt wird und der Auslaufverschluss (12) geöffnet wird,
e) die Mischung (17) aus der Trommel (2) in den Abführstutzen (15) entleert wird und anschließend ein Auslaufverschluss (12) der Trommel (2) geschlossen wird, und
f) die von der Folie (4) dicht umschlossene Trommel (2) einer geeigneten Aufbereitungsvorrichtung oder der Entsorgung zugeführt wird.

12. Verfahren nach Anspruch 11,
**dadurch gekennzeichnet, dass**
die mit Mischgut gefüllte Trommel (2) samt der Folie (4) in einen passenden, die Trommel (2) umschließenden Schutzbehälter, insbesondere Druckbehälter (11) eingesetzt wird, indem
- die Trommel (2) in das Oberteil (11a) des Druckbehälters eingebracht wird,
- der obere Überstand (4a) der Folie (4) auf der Außenseite des Oberteiles (11a), insbesondere einem frei endenden Ringflansch (11') mit verringertem Außendurchmesser gegenüber dem Rest des Außendurchmessers an wenigstens einer ringförmig dicht umlaufenden Befestigungsstelle festgelegt wird,
- das Unterteil (11b) des Druckbehälters (11) dicht gegen das Oberteil (11a) außerhalb der Folie (4) und des Überstandes (4a) angelegt wird.

13. Verfahren nach Anspruch 12,
**dadurch gekennzeichnet, dass**
- die Folie (4) an die Innenseite des Unterteiles (11b) des Druckbehälters (11) angesaugt wird, ohne dass sich die Befestigungen der Folie (4) am unteren Ende der Trommel (2) und auf der Außenseite des Oberteiles (11a) des Druckbehälters (11) lösen
und/oder
- die obere Klemmvorrichtung (8b) der Folie (4) an der Trommel (2) oberhalb des teilweise durchlässigen Wandbereiches (2a) gelöst wird, bevor das Unterteil (11b) am Oberteil (11a) angesetzt wird, und
- Luft in den Zwischenraum zwischen die Folie (4) und den wenigstens teilweise durchlässigen Wandbereich (2a) eingeblasen wird, insbesondere über die Wandung, insbesondere den Ringflansch (11') des Oberteils (11a) des Druckbehälters (11).

14. Verfahren nach einem der vorhergehenden Verfahrensansprüche 12 bis 13,
**dadurch gekennzeichnet, dass**
insbesondere vor dem Einsetzen der Trommel (2) in den Druckbehälter (11)
- außerhalb und nahe an dem wenigstens einen Anschlussstutzen (7a) das dort anzusetzende Anschlussteil positioniert und eine schlauchförmige Folie (4') einerseits am Anschlussstutzen (7a) und andererseits am davon abgewandten Ende des Anschlussteiles dicht umlaufend auf deren Außenumfang befestigt wird,
- innerhalb der Folie (4') der den Anschlussstutzen (7a) verschließende Verschluss (7a) geöffnet und innerhalb der Folie (4') gelagert wird,
- das wenigstens eine Anschlussteil auf den Anschlussstutzen (7a) aufgesetzt wird.

15. Verfahren nach einem der vorhergehenden Verfahrensansprüche 12 bis 14,
**dadurch gekennzeichnet, dass**
- beim Einbringen der Trommel (2) in den Druckbehälter die Anschlussteile an den Anschlussstutzen (27a, ...) an in den Druckbehälter hineinführende passende Anschlussadapter (30a, b) dicht angeschlossen werden
und/oder
- nach dem Schließen des Druckbehälters (11) um die Trommel (2) durch Einblasen von Luft, die durch die wenigstens teilweise durchlässigen Wandbereiche (2a) hindurch ins Innere der Trommel (2) dringt, die Mischung (17) im Inneren der Trommel (2) aufgewirbelt und eine Feinvermischung und/oder eine Trocknung der Mischung durchgeführt wird und die Mischluft über einen Filtereinsatz (28) in wenigstens einem Anschlussstutzen (7a) aus der Trommel (2) abgeführt wird und/oder
- bei der Feinvermischung über einen Beschickungsstutzen (29) in einem der Anschlussstutzen (7b) Zusatzstoffe (Feuchtigkeit, Gleitmittel etc.) zum Granulieren, Beschichten oder andere Ergebnisse der Mischung (17) zugeführt werden.

16. Verfahren nach einem der vorhergehenden Verfahrensansprüche 12 bis 15,
**dadurch gekennzeichnet, dass**
- während der Zufuhr von Mischluft die Folie (4) an die Innenseite des Unterteils (11b) des Druckbehälters (11) herangezogen bleibt, insbesondere durch Beaufschlagen mit Unterdruck
und/oder
- die Trommel (2) aus dem Druckbehälter (11) entnommen wird, indem nach dem Abnehmen des Unterteiles (11b)
- die Trommel (2) aus dem Oberteil (11a) herausgenommen wird, ohne dass die obere und untere Befestigung der Folie einerseits am Oberteil (11a) und andererseits am Auslauf (6) der Trommel (2) gelöst wird, ggf. unter Abziehen des auf dem Ringflansch (11') des Oberteiles (11a) gespeicherten oberen Überstandes (4a),
- dichtes radiales Verschließen der schlauchförmigen Folie (4) zwischen Oberteil (11a) und der Trommel (2) an wenigstens einer Schließstelle (19a,...),
- Abtrennen der dicht verschlossenen Folie (4) an der einen Schließstelle oder zwischen den beiden Schließstellen (19a,b),
- Verbringen der dicht von der Folie (4) eingeschlossenen Trommel (2) zu einem Abführstutzen (14).

17. Verfahren nach einem der vorhergehenden Verfahrensansprüche 12 bis 16,
**gekennzeichnet durch**
Entsorgen der auf dem Oberteil (11a) des Druckbehälters (11) verbliebenen Restfolie (4') **durch**
- Aufsetzen einer auf das Oberteil (11a) passenden Reinigungshaube (25) auf das Oberteil der Restfolie (4'),
- Ergreifen der Restfolie (4') unter Verwendung eines Entsorgungsbeutels (14), der auf der Außenseite der Entsorgungsöffnung (13) der Reinigungshaube (25) dicht umlaufend befestigt ist und ins Innere der Reinigungshaube (25) hinein gestülpt werden kann,
- Ergreifen der Restfolie (4') und nach außen Ziehen **durch** die Entsorgungsöffnung (13) ins Innere des Entsorgungsbeutels (14) hinein, ggf. nach Lösen der oberen Klemmvorrichtung (8c) der Restfolie (4') an dem Oberteil (11a),
- dichtes radiales Verschließen des schlauchförmigen Entsorgungsbeutels (14) zwischen der Entsorgungsöffnung (13) und der aufgenommenen Restfolie an wenigstens einer, insbesondere zwei beabstandeten Verschlussstellen (19a,b),
- Abtrennen an oder zwischen den beiden Verschlussstellen (19a,b) und
- Verbringen der dicht eingeschlossenen Restfolie (4') zur weiteren Entsorgung,
- Reinigen des Inneren der Reinigungshaube (25) sowie der damit verbundenen Oberteils (11a) mittels der in der Reinigungshaube (25) angeordneten Spülvorrichtung (25a) und
- Abführung der Spülflüssigkeit über den Auslauf (26) der Reinigungshaube (25).

18. Verfahren nach Anspruch 17,
**gekennzeichnet durch**
- dichtes Ansetzen einer Dekontaminations-Vorrichtung (23) an die Entsorgungsöffnung (13) von außen über die dort vorhandenen Restbeutel (14') hinweg,
- Aufnahmen des Restbeutels (4') in einen Entsorgungsbeutel (14") der Dekontaminations-Vorrichtung (23), und
- analoges dichtes Einschließen des Restbeutels (14') und anschließendes Reinigen im Inneren der Dekontaminations-Vorrichtung (23) **durch** eine dort eingebaute Spülvorrichtung analog zum Vorgang mit der Reinigungshaube (25).

## Claims

1. A device for contamination-free loading and emptying, in particular a mixer (1), comprising:
- a mixing drum (2), including
- an inlet (3) and an outlet (6), and
- a wall portion (2a) that is at least partially permeable for blowing in drying air and which is otherwise completely closed tight,
- a cover which envelops the partially permeable wall portion (2a) in a tightly circumferential manner,
- wherein the cover is a flexible foil (4) which is removably attached outside of the partially permeable wall portions (2a), in particular on an outside of the drum (2).

2. The device according to claim 1,
- wherein the at least partially permeable wall portion (2a) extends above the outlet (6), in particular so that the ate last partially permeable wall portion expands upward in a cone shape and/or
- wherein the foil (4) is configured hose-shaped and attached in a removable manner on the one hand side in a tightly circumferential manner below the partially permeable wall portion (2a) and on the other hand side attached in a tightly circumferential manner above the partially permeable wall portion (2a), in particular on the outside of the drum (2), and/or
- wherein the device includes a pressure container (11) into which the drum (2) fits.

3. The device according to claim 2,
- wherein the foil (4) is long enough in axial direction (10) so that the drum can be completely removed from one portion of the pressure container (11) without removing an upper attachment in particular at an outside of the pressure container (11) within the foil (4) and the foil (4) can be tightly closed between the pressure container (11) and the drum (2) and/or
- wherein the foil (4) is attached at the drum (2) through disengageable clamping devices, in particular circumferential clamping devices (8a, b) and/or
- wherein the clamping devices include an O-ring (5) enveloping the foil on its outside in a circumferential manner or a circumferential tension belt.

4. The device according to one of the preceding claims 2 or 3
- wherein the foil (4) becomes tighter in a cone shape from a portion above the partially permeable portion (2a) towards an outlet (6) and/or
- wherein the foil (4) includes an upper protrusion (4a) beyond the portion of the upper clamping device (8a), and/or
- wherein at least the upper protrusion (4a), in particular the entire upper portion of the foil (4) has a larger diameter than an exterior diameter of the drum (2), in particular a larger exterior diameter than an exterior diameter of a pressure container (11), wherein the drum (2) fits into the pressure container.

5. The device according to one of the preceding claims 3 through 4
- wherein the outlet (6) is configured so that its opening and closing does not impair the attachment, in particular a clamping device (8b) of the foil (4) at the drum (2) where the attachment is provided proximal to the outlet (6) and/or
- wherein the outlet (6) is closed by an outlet closure (12) disposed in the outlet spout and tightly closing the outlet spout, where the outlet closure is configured cone shaped in particular and displaceable into the drum (2) and/or
- wherein at least one additional clamping device (8c, ...) is provided on an outside of the pressure container (11) for circumferentially tight attachment of the foil (4) on the outer circumference of the pressure vessel (11)

6. The device according to one of the preceding claims 2 through 5,
- wherein the pressure container includes an air inlet (18) whose opening is disposed radially between the outer circumference of the drum (2) inserted into the pressure container (11) and the inside of the foil (4) attached on the outside of the pressure container (11), and/or
- wherein the pressure container (11) includes a vacuum connection (24) in the portion of the foil (4) attached at the inserted drum, wherein the vacuum connection is used for pulling the foil (4) outward to the inside of the pressure contained (11), and/or
- wherein the foil (4) includes a sufficiently large diameter in radial direction in order not to be removed from its tight attachment at the outside of the drum (2) or the pressure container (11) when pulled against the pressure container (11).

7. The device according to one of the preceding claims,
- wherein the foil (4) is a thermoplastic foil, in particular a hot seal capable foil (4) and/or
- wherein the drum (2) in particular at its top side includes at least one connection spout (7a...) and a hose-shaped foil (4') is respectively attached circumferentially tight on the one hand side at the connection spout (7a,...) and on the other hand side at an end of the connection component inserted into the connection spout, where the end is oriented away from the connection spout and/or
- wherein the protection foil is long enough in axial direction (10) so that the connection component is completely removable from one portion of the connection spout (7a) and the foil (4) is configured to be closed tight between the connection spout (7a) and the connection component without removing the upper attachment at the outside of the connection spout (7a) within the protective foil (4).

8. The device according to claim 7,
- wherein the connection spouts (7a, b) are closeable through closures (27a, b), wherein the closures are configured to be disengaged through the foil when the foil (4') is already attached at the connecting spout (7a) and at the connection component and so that the connection spouts are configured to be supported within the foil in addition to the connection component and can be inserted again in the connection component and/or
- wherein the hose-shaped foil (4') is sufficiently sized in axial and/or radial direction in order to receive the closure (27a) closing the connection spout (7a,...) in addition to the connection component and/or
- wherein the connection component is a filter insert (28).

9. The device according to one of the preceding claims 7 through 8
- wherein the connection component is a feed spout (29) and/or
- the pressure container (11) includes a cleaning hood (25) for tight placement at the upper portion (11a) of the pressure container (11) and/or
- the cleaning hood (25) includes a flushing device (25a).

10. The device according to claim 9
- wherein the cleaning hood (25) includes a disposal opening (13) which is large enough for introducing a fist and close enough to the attachment of the foil (4) at the top portion (11a) of the pressure container (11) so that the foil can be gripped by a hand introduced through the disposal opening (13) and/or
- wherein the pressure container (11) includes a decontamination device (23) for tight placement onto the disposal opening (13), and/or
- wherein the drum (2) is a disposable drum.

11. A method for contamination free loading and emptying a device, in particular a mixer according to one of the preceding claims
a) wherein a foil (4) is attached at an outer circumference of the at least partially permeable wall portion (2a) of the drum (2) in a circumferentially tight manner, so that the partially circumferential portion (2a) is covered at an outside by the foil (4), wherein the foil (4) has an upper protrusion (4a) above its upper attachment,
b) wherein components are introduced through an open inlet (3) one after another into a drum (2) that is otherwise closed tight and the inlet (3) is closed tight,
c) wherein the content of the drum (2) is coarsely mixed by moving the drum (2), in particular by rotating the drum (2) about its rotation axis (20) or wobbling it about its rotation axis (20),
d) wherein the drum (2) that is tightly enclosed in the foil besides an outlet (6) is placed onto a discharge spout (15) fitting into the outlet (6) and the outlet closure (12) is opened,
e) wherein a mixture (17) is emptied form the drum (2) into the outlet spout (15) and an outlet closure (12) of the drum (2) is subsequently closed, and
f) wherein the drum (2) tightly enclosed by the foil (4) is supplied to a suitable processing device for disposal.

12. The method according to claim 11,
- wherein the drum (2) filled with mixing material and including the foil (4) is inserted into a fitting protective container enclosing the drum (2), in particular a pressure container (11) including the following steps:
- inserting the drum (2) into the top component (11a) of the pressure container;
- attaching the upper protrusion (4a) of the foil (4) on an outside of the upper component (11a), in particular a freely terminating annular flange (11) with a reduced outer diameter relative to the rest of the outer diameter at least at one attachment location that is circumferential in an annular tight manner,
- applying the bottom component (11 b) of the pressure container (11) in a tight manner against the top component (11a) outside of the foil (4) and the protrusion (4a).

13. The method according to claim 12,
- wherein the foil (4) is sucked against the inside of the bottom component (11 b) of the pressure container (11) without the attachments of the foil (4) at a lower end of the drum (2) and at the outside of the upper component (11a) of the pressure container (11) disengaging and/or
- the upper clamping device (8b) of the foil (4) is disengaged at the drum (2) above the partially permeable wall portion (2a), before the lower component (11b) is applied to the upper component (11a), and
- wherein air is blown into the intermediary space between the foil (4) and the at least partially permeable wall portion (2a), in particular through the wall, in particular through the annular flange (11') of the upper component (11 a) of the pressure container (11).

14. The method according to one of the preceding method claims 12 through 13 including the following steps in particular before inserting the drum (2) into the pressure container (11):
- positioning the connecting component to be applied wherein the positioning is performed outside and proximal to the at least one connection spout (7a) and attaching a hose-shaped foil (4') on the one hand side at the connection spout (7a) and on the other hand side at an end of the connection component that is oriented away from the connection spout, wherein the attaching is performed in a circumferentially tight manner on the outer circumference of the connection spout and the connection component.
- opening the closure (27a) closing the connection spout (7a) within the foil (4') and supporting the closure (27a) within the foil (4'), and
- placing the at least one connection component onto the connection spout (7a)

15. The method according to one of the preceding method claims 12 through 14 further including the following steps:
- connecting the connection components at the connection spouts (7a, ...) in a tight manner at fitting connection adapters (30a, b) leading into the pressure container,
- swirling up the mixture (17) in the interior of the drum (2) after closing the pressure container (11) about the drum (2) through blowing in air which penetrates into an interior of the drum (2) through at least partially permeable wall portions (2a) and providing fine mixing and/or drying for the mixture and removing the mixing air through a filter insert (28) in at least one connection spout (7a) from the drum (2), and/or
- supplying additives (moisture, lubricants etc.) for granulating, coating or other results for the mixture (17) during fine mixing through a feed spout (29) in one of the connection spouts (7b).

16. The method according to one of the preceding method claims 12 through 15, further including the following steps:
- keeping the foil (4) pulled against an inside of the base component (11 b) of the pressure container (11) in particular through vacuum loading while supplying mixing air, and/or
- removing the drum (2) from the pressure container (11) through performing the following steps after removing the base component (11b):
- removing the drum (2) from the upper component (11a) without disengaging the upper and lower attachment of the foil on the one hand side at the top component (11a) and on the other hand side at the outlet (6) of the drum (2), possibly while pulling off the upper protrusion (4a) stored on the annular flange (11') of the upper component (11a),
- tight radial closing of the hose shaped foil (4) between the upper component (11a) and the drum (2) at least at one closing location (19a, ...),
- separating the tightly closed foil (4) at one closing location or between the two closing locations (19a, b)
- moving the drum (2) that is tightly enclosed by the foil (4) to a removal spout (14).

17. The method according to one of the preceding method claims 12 through 16 further including a step of disposing of the residual foil (4') remaining on the top component (11 a) of the pressure container (11) by performing the following steps:
- placing a cleaning hood (25) fitting on the top component (11a) onto the top component of the residual foil (4'),
- gripping the residual foil (4') using a disposal bag (14) which is attached in a tightly circumferential manner on the outside of the disposal opening (13) of the cleaning hood (25) and which is configured to be folded into the interior of the cleaning hood (25),
- gripping the residual foil (4') and pulling it outward through the disposal opening (13) into an interior of the disposal bag (14), possibly after disengaging the upper clamping device (8c) of the residual foil (4') at the upper component (11a),
- closing the hose shaped disposal bag (14) between the disposal opening (13) and the received residual foil at least at one closing location, in particular preferably at two offset closing locations (19a, b) in a radially tight manner,
- cutting the disposal bag at or between the two closure locations (19a, b),
- moving the tightly enclosed residual foil (4') for further disposal,
- cleaning the interior of the cleaning hood (25) and the upper component (11a) connected therewith through the flushing device (25a) arranged in the cleaning hood (25), and
- removing the flushing liquid through the outlet (26) of the cleaning hood (25).

18. The method according to claim 17 further including the following steps:
- tightly applying a decontamination device (23) to the disposal opening (13) from an outside over the residual bags (14') arranged at this location,
- receiving the residual bag (4') in a disposal bag (14') of the decontamination device (23), and
- analogously tightly enclosing the residual bag (14') and subsequently cleaning in an interior of the decontamination device (23) through a flushing device installed therein in analogy to the process performed upon the cleaning hood (25).

## Revendications

1. Dispositif pour le chargement et le vidage sans contamination, en particulier, d'un mélangeur (1) avec
- un tambour mélangeur (2), qui présente
- une entrée (3) et une sortie (6) et
- une zone de paroi au moins partiellement perméable (2a) pour l'introduction d'air de séchage et qui est autrement complètement fermé de manière étanche,
- un recouvrement qui recouvre circulairement de manière étanche la zone de paroi (2a) partiellement perméable,
**caractérisé en ce que**
le recouvrement est un film flexible (4) qui est fixé de manière amovible à l'extérieur des zones de paroi (2a) partiellement perméables, en particulier sur la face externe du tambour (2).

2. Dispositif selon la revendication 1, **caractérisé en ce que**
- la zone de paroi (2a) au moins partiellement perméable s'étend vers le haut en amont de la sortie (6) en particulier en s'élargissement en forme de cône et/ou
- le film (4) a une forme tubulaire et est fixé d'une part circulairement de manière étanche en aval et d'autre part circulairement de manière étanche en amont de la zone de paroi (2a) partiellement perméable en particulier sur la face externe du tambour (2)et/ou
- le dispositif comprend un récipient sous pression (11) dans lequel est introduit le tambour (2).

3. Dispositif selon la revendication 2,
**caractérisé en ce que**
- le film (4) est dans le sens axial (10) suffisamment long pour que sans retrait de la fixation supérieure en particulier sur la face externe du récipient sous pression (11) à l'intérieur du film (4), le tambour (2) est retiré complètement d'une partie du récipient sous pression (11) et le film (4) peut être fermé de manière étanche entre le récipient sous pression (11) et le tambour (2)
et/ou
- le film (4) est fixé sur le tambour (2) au moyen de dispositifs de serrage amovibles, en particulier de dispositifs de serrage (8a, b) circulaires
et/ou
- les dispositifs de serrage se composent d'un joint torique (5) circulaire entourant le film sur l'extérieur en direction de la face externe du film ou d'une courroie circulaire de serrage.

4. Dispositif selon l'une des revendications précédentes 2 ou 3, **caractérisé en ce que**
- le film (4) devient plus étroit en forme de cône depuis la zone en amont de la zone de paroi (2a) partiellement perméable en direction de la sortie (6)
et/ou
- le film (4) présente au-delà de la zone du dispositif de serrage supérieure (8a) une partie dépassante supérieure (4a) et/ou
- au moins la partie dépassante supérieure (4a), en particulier toute la zone supérieure du film (4), présente un diamètre plus important que le diamètre externe du tambour (2), en particulier un diamètre externe plus grand que le diamètre externe d'un récipient sous pression (11) dans lequel est introduit le tambour (2).

5. Dispositif selon l'une des revendications précédentes 3 à 4, **caractérisé en ce que**
- la sortie(6) est réalisée de sorte que son ouverture et sa fermeture n'endommagent pas la fixation se trouvant proche de la sortie (6) en particulier le dispositif de serrage (8b), du film (4) sur le tambour (2),
et/ou
- la sortie (6) est fermée par une fermeture de sortie (12) se trouvant dans la tubulure de sortie et fermant celle-ci de manière étanche, fermeture qui a particulièrement une forme sphérique et dans lequel le tambour (2) peut être déplacé
et/ou
- sur la face externe du récipient sous pression (11), il est prévu au moins un autre dispositif de serrage (8c, ...) pour une fixation circulaire étanche du film (4) sur la périphérie externe du récipient sous pression (11).

6. Dispositif selon l'une des revendications précédentes 2 à 5, **caractérisé en ce que**
- le récipient sous pression possède une entrée d'air (18) dont l'embouchure se trouve placée radialement entre la périphérie externe du tambour (2) inséré dans le récipient sous pression (11) et la face interne du film (4) fixé sur la face externe du récipient sous pression (11)
et/ou
- le récipient sous pression (11) présente dans la zone du film (4) fixé sur la face externe du récipient sous pression (11) un raccord de dépression (24) pour tirer vers l'extérieur le film (4) contre la face interne du récipient sous pression (11)
et/ou
- le film (4) présente dans le sens radial un diamètre suffisamment grand pour ne pas être desserré de sa fixation étanche sur la face externe du tambour (2) respectivement du récipient sous pression (11) quand le film est tiré contre le récipient sous pression (11).

7. Dispositif selon l'une des revendications précédentes, **caractérisé en ce que**
- le film (4) est un film thermoplastique, en particulier un film thermoscellable (4)
et/ou
- le tambour (2) présente en particulier sur sa face supérieure, au moins une tubulure de raccordement (7a,...) et un film tubulaire (4') est fixé respectivement circulairement de manière étanche d'un côté sur la tubulure de raccordement (7a,...) et de l'autre côté sur l'extrémité qui en est détournée, du point de raccordement qui y est inséré
et/ou
- le film de protection est suffisamment long dans le sens radial (10) pour que sans retrait de la fixation supérieure sur la face externe de la tubulure de raccordement (7a) à l'intérieur du film de protection (4), la partie de raccordement puisse être retirée complètement d'une partie de la tubulure de raccordement (7a) et le film (4) puisse être fermé de manière étanche entre la tubulure de raccordement (7a) et la partie de raccordement.

8. Dispositif selon al revendication 7,
**caractérisé en ce que**
- les tubulures de raccordement (7a, b)) peuvent être fermés par des fermetures (27a, b) qui sont réalisées de sorte que, quand le film (4') est déjà fixé sur la tubulure de raccordement (7a) et la partie de raccordement, elles peuvent être désserrées à travers le film et à l'intérieur du film peuvent être logées en supplément de la partie de raccordement et être à nouveau introduites dans la tubulure de raccordement (7a...)
et/ou
- le film tubulaire (4') présente dans la direction axiale et/ou radiale de dimensions suffisantes pour recevoir la fermeture (27a) fermant la tubulure de raccordement (7a, ...) en supplément de la partie de raccordement
et/ou
- la partie de raccordement est une garniture de filtre (28).

9. Dispositif selon l'une des revendications précédentes 7 à 8, **caractérisé en ce que**
- la partie de raccordement est une tubulure de chargement (29) et/ou
- le récipient sous pression (11) comprend une hotte de nettoyage (25) pour une application étanche sur la partie supérieure (11a) du récipient sous pression (11)
et/ou
la hotte de nettoyage (25) présente un dispositif de lavage (25a).

10. Dispositif selon la revendication 9,
**caractérisé en ce que**
- la hotte de nettoyage (25) présente une ouverture de mise au rebut (13) qui est suffisamment grande pour laisser passer un poing et est si proche de la fixation du film (4) sur la face supérieure (11a) du récipient sous pression (11) que le film peut être saisi par une main introduite par l'ouverture de mise au rebut (13) et/ou
- le récipient sous pression (11) comprend un dispositif de décontamination (23) pour une application étanche sur l'ouverture de mise au rebut (13)
et/ou
- le tambour (2) est un tambour à usage unique.

11. Procédé pour le chargement et le vidage sans contaminer d'un dispositif en particulier d'un mélangeur selon l'une des revendications précédentes,
**caractérisé en ce qu'**
a) un film (4) est fixé circulairement de manière étanche sur la périphérie externe du tambour (2) autour de la zone de paroi (2a) au moins partiellement perméable de sorte que la zone de paroi (2a) partiellement perméable est recouverte par le film (4) sur la face externe, le film (4) présentant en amont de la fixation supérieure une partie dépassante supérieure (4a)
b) les composants sont ajoutés dans le tambour (2) fermé étanche par l'ouverture ouverte (3) les uns après les autres et l'entrée (3) est fermée,
c) le contenu du tambour (2) est mélangé grossièrement par déplacement du tambour (2), en particulier par rotation du tambour (2) autour de son axe de rotation (20) et/ou par culbutage de l'axe de rotation (20),
d) le tambour (2) fermé étanche dans le film à l'exception de la sortie (6) est placé sur une tubulure d'évacuation (15) adaptée à la sortie (6) et la fermeture de sortie (12) est ouverte,
e) le mélange (17) est vidé depuis le tambour (2) dans la tubulure de raccordement (15) et ensuite une fermeture de sortie (12) du tambour (2) est fermée, et
f) le tambour (2) entouré par le film (4) est amené à un dispositif de traitement approprié ou est mis au rebut.

12. Procédé selon la revendication 11,
**caractérisé en ce que**
- le tambour (2) rempli de produit de mélange avec le film (4) est introduit dans un récipient de protection approprié entourant le tambour (2), en particulier un récipient sous pression (11) dans le fait que
- le tambour (2) est introduit dans la partie supérieure (11a) du récipient sous pression,
- la partie dépassante (4a) du film (4) est fixée sur au moins un point de fixation étanche circulaire annulaire, sur la face externe de la partie supérieure (11a), en particulier sur une bride annulaire se terminant librement (11') avec un diamètre externe réduit par rapport au reste du diamètre externe,
- la partie inférieure (11b) du récipient sous pression (11) est appliquée de manière étanche contre la partie supérieure (11a) à l'extérieur du film (4) et de la partie dépassante (4a).

13. Procédé selon la revendication 12,
**caractérisé en ce que**
- le film (4) est aspiré contre la face interne de la partie inférieure (11b) du récipient sous pression (11) sans que les fixations du film (4) se desserrent à l'extrémité inférieure du tambour (2) et sur la face externe de la partie supérieure (11a) du récipient sous pression (11),
et/ou
- le dispositif de serrage (8b) du film (4) est desserré sur le tambour (2) en amont de la zone de paroi (2a) partiellement perméable avant que la partie inférieure (11b) soit appliquée sur la partie supérieure (11a), et
- l'air est soufflé dans l'espace intermédiaire formé entre le film (4) et la zone de paroi (2a) au moins partiellement perméable, en particulier par la paroi, en particulier la bague annulaire (11') de la partie supérieure (11a) du récipient sous pression (11).

14. Procédé selon l'une des revendications précédentes 12 à 13,
**caractérisé en ce qu'**
en particulier avant l'introduction du tambour (2) dans le récipient sous pression (11)
- la partie de raccordement à placer est positionnée à l'extérieur et à proximité d'au moins une tubulure de raccordement (7a) et un film tubulaire (4') est fixé d'une part à la tubulure de raccordement (7a) et d'autre part à l'extrémité de la partie de raccordement, extrémité qui est détournée de la tubulure
- la fermeture (7a) fermant la tubulure de raccordement (7a) est ouverte à l'intérieur du film (4') et est logée à l'intérieur du film (4'),
- au moins une partie de raccordement est placée sur la tubulure de raccordement (7a).

15. Procédé selon l'une des revendications précédentes 12 à 14,
**caractérisé en ce que**
- lors de l'introduction du tambour (2) dans le récipient sous pression, les parties de raccordement des tubulures de raccordement (27a, ...) sont raccordées de manière étanche aux adaptateurs de raccordement appropriés pénétrant dans le récipient sous pression et/ou
- après la fermeture du récipient sous pression (11) autour du tambour (2) par soufflage de l'air qui pénètre par la zone de paroi (2a) au moins partiellement perméable à l'intérieur du tambour (2), le mélange (17) est amené à tourbilloner à l'intérieur du tambour (2) et un fin mélange et/ou un assèchement du mélange est effectué et l'air de mélange est évacué hors du tambour (2) par une garniture de filtre (28) dans au moins une tubulure de raccordement (7a),
et/ou
- lors du fin mélange, des additifs (humidité, agents de glisse, etc..) pour la granulation, le recouvrement ou autres résultats du mélange (17) sont amenés par une tubulure de chargement (29) dans une des tubulures de raccordement (7b).

16. Procédé selon l'une des revendications précédentes 12 à 15, **caractérisé en ce que**
- pendant l'amenée d'air mélangé, le film (4) reste plaqué contre la face interne de la partie inférieure (11b) du récipient sous pression (11), en particulier par application de dépression et/ou
- le tambour (2) est retiré hors du récipient sous pression (11), dans le fait qu'après le retrait de la partie inférieure (11b),
- le tambour (2) est retiré hors de la partie supérieure (11a) sans que la fixation supérieure et inférieure du film soit desserrée d'une part sur la partie supérieure (11a) et d'autre part sur la sortie (6) du tambour (2), éventuellement en retirant la partie dépassante supérieure (4a) stockée sur la bride annulaire (11') de la partie supérieure (11a),
- fermeture radiale étanche du film tubulaire (4) entre la partie supérieure (11a) et le tambour (2) sur au moins un point de fermeture (19a, ...),
- séparation du film (4) fermé étanche à un point de fermeture ou entre les deux points de fermeture (19a, b),
- amenée du tambour (2) entourée de manière étanche par le film (4) à une tubulure d'évacuation (14).

17. Procédé selon l'une des revendications précédentes 12 à 16, **caractérisé par**
mise au rebut du film résiduel (4') resté sur la partie supérieure (11a) du récipient sous pression (11) par
- placement d'une hotte de nettoyage (25) adaptée à la partie supérieure (11a) sur la partie supérieure du film résiduel (4'),
- saisie du film résiduel (4') en utilisant un sachet de mise au rebut (14) qui est fixé circulairement de manière étanche sur la face externe de l'ouverture de mise au rebut (13) de la hotte de nettoyage (25) et qui peut être enfilé à l'intérieur de la hotte de nettoyage (25),
- saisie et amenée du film résiduel (4') en tirant vers l'extérieur par l'ouverture de mise au rebut (13) à l'intérieur du sachet de mise au rebut (14), éventuellement après desserrement du dispositif de serrage supérieur (8c) du film résiduel (4') sur la partie supérieure (11a),
- fermeture radiale étanche du sachet de mise au rebut tubulaire (14) entre l'ouverture de mise au rebut (13) et le film résiduel réceptionné à au moins un en particulier deux points de fermeture espacés (19a, b),
- séparation à un ou entre les deux points de fermeture (19a, b) et
- transport du film résiduel (4') enfermé de manière étanche pour la suite de la mise au rebut,
- nettoyage de l'intérieur de la hotte de nettoyage (25) ainsi que de la partie supérieure (11a) reliée à cette dernière au moyen du dispositif de lavage (25a) disposé dans la hotte de nettoyage (25) et
- évacuation du liquide de lavage par la purge (26) de la hotte de nettoyage (25).

18. Procédé selon la revendication 17,
**caractérisé par**
- application étanche d'un dispositif de décontamination (23) sur l'ouverture de mise au rebut (13) depuis l'extérieur au-dessus des sachets résiduel (14') s'y trouvant,
- réception du sachet résiduel (4') dans un sachet de mise au rebut (14") du dispositif de décontamination (23), et
- fermeture analogue étanche du sachet résiduel (14') et nettoyage ultérieur à l'intérieur du dispositif de décontamination (23) par un dispositif de nettoyage monté de manière analogue à l'opération avec la hotte de nettoyage (25).
